(19) Europäisches Patentamt
European Patent Office
Office européen des brevets

(11) **EP 4 513 944 A1**

(12) **EUROPEAN PATENT APPLICATION**
published in accordance with Art. 153(4) EPC

(43) Date of publication:
**26.02.2025 Bulletin 2025/09**

(21) Application number: **23791153.2**

(22) Date of filing: **15.04.2023**

(51) International Patent Classification (IPC):
*H04W 24/02* (2009.01)

(52) Cooperative Patent Classification (CPC):
**H04W 24/02**

(86) International application number:
**PCT/CN2023/088546**

(87) International publication number:
**WO 2023/202498 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2022 CN 202210406402**

(71) Applicant: **Beijing Unisoc Communications
Technology
Co., Ltd
Beijing 100083 (CN)**

(72) Inventor: **WANG, Hualei
Beijing 100083 (CN)**

(74) Representative: **Mewburn Ellis LLP
Aurora Building
Counterslip
Bristol BS1 6BX (GB)**

(54) **CHANNEL INFORMATION ACQUISITION METHOD, AND APPARATUS**

(57) A method and an apparatus for obtaining channel information are provided in the disclosure, so that a terminal device can predict channel information, which is beneficial to improving network performance. The method includes: receiving indication information from a network device, the indication information indicating predicted channel information; and determining second channel information according to first channel information, the first channel information including at least one channel information in a first time window, the second channel information including at least one channel information in a second time window, and an end time of the first time window being earlier than a start time of the second time window.

FIG. 4

**Description**

CROSS-REFERENCE TO RELATED APPLICATION(S)

This application claims priority to Chinese Patent Application No. 202210406402.6, filed April 18, 2022, and entitled "METHOD AND APPARATUS FOR OBTAINING CHANNEL INFORMATION", which is incorporated herein by reference as if reproduced in its entirety.

TECHNICAL FIELD

This application relates to the field of communications, and particularly to a method and apparatus for obtaining channel information.

BACKGROUND

In a 5th generation (5G) communication system, a terminal device can provide feedback on downlink channel quality to a network device, for example, feeding back a downlink channel instruction through channel state information (CSI). Upon receiving the CSI, the network device can perform beam management, mobility management, rate matching, and other processing according to the CSI, to enhance communication quality. Currently, a key research focus is on how the terminal device obtains the CSI.

SUMMARY

Embodiments of the disclosure provide a method and apparatus for obtaining channel information, which can realize prediction of channel information, thereby facilitating improvement of network performance.

In a first aspect, the disclosure provides a method for obtaining channel information. The method is applied to a terminal device. The method includes: receiving indication information from a network device, the indication information indicating predicted channel information; and determining second channel information according to first channel information, the first channel information including at least one channel information in a first time window, the second channel information including at least one channel information in a second time window, and an end time of the first time window being earlier than a start time of the second time window.

As can be seen, when receiving the indication information for predicting the channel information, the terminal device can predict the second channel information according to the first channel information, thereby realizing prediction of the channel information, which helps to improve network performance.

In a possible embodiment, on condition that the second channel information is determined, a CSI in the second time window is determined according to the second channel information, and further sent to the network device, so that the network device can perform beam management, mobility management, link adaptation, and other processing according to the CSI in the second time window.

In a possible embodiment, the first time window includes one or more time units, and the second time window includes one or more time units.

In a possible embodiment, the first channel information including the at least one channel information in the first time window includes: the first channel information including channel information associated with M first channel state information (CSI) reports in the first time window, where M is a positive integer, so that the terminal device predicts the second channel information according to the channel information associated with the M first CSI reports in the first time window, thereby helping to improve network performance; where a start time of the first time window is no earlier than an end time of a first time unit, and/or the end time of the first time window is no later than an end time of a second time unit; the first time unit is spaced apart from a third time unit by a first difference, the second time unit is spaced apart from the third time unit by a second difference, the first difference is greater than or equal to the second difference, and the third time unit is used for sending a CSI in the second time window

For example, the first difference is predefined, or indicated by the network device, or determined according to capability information of a terminal device; and/or, the second difference is predefined, or indicated by the network device, or determined according to the capability information of the terminal device.

In a possible embodiment, the first channel information includes channel information associated with *M* consecutive first CSI reports in the first time window; and/or, the *M* first CSI reports correspond to a non-zero-power channel state information reference signal (NZP CSI-RS) for channel measurement, and the number of ports corresponding to the NZP CSI-RS is the same as the number of ports corresponding to the first channel information.

In a possible embodiment, the method further includes: determining a reference CSI report from the M first CSI reports, where a difference between the second time unit and a time unit occupied by the reference CSI report is less than or equal to a threshold.

In a possible embodiment, the CSI in the second time window is contained in a second CSI report, and a CSI processing time corresponding to the second CSI report is a time interval from a first physical uplink channel resource to a second physical uplink channel resource in time domain, the first physical uplink channel resource is used for carrying the reference CSI report, and the second physical uplink channel resource is used for carrying the second CSI report.

In a possible embodiment, the CSI in the second time window is contained in the second CSI report, and the number of CSI processing units (CPU) corresponding to the second CSI report is R, where R is a positive integer. For example, R is predefined or indicated by the network device.

In a possible embodiment, the first channel information including the at least one channel information in the first time window includes: the first channel information including channel information associated with $N$ CSI-RS resources in the first time window, where $N$ is a positive integer, so that the terminal device predicts the second channel information according to the channel information associated with the N CSI-RS resources in the first time window; where a start time of the first time window is no earlier than an end time of the first time unit, and/or the end time of the first time window is no later than an end time of the second time unit.

In a possible embodiment, the first channel information includes channel information associated with $N$ consecutive CSI-RS resources in the first time window; and/or the $N$ CSI resources are NZP CSI-RS resources for channel measurement, and the number of ports corresponding to the NZP CSI-RS resources is the same as the number of ports corresponding to the second channel information.

In a possible embodiment, the method further includes: determining a fourth time unit occupied by a CSI reference resource in time domain, the CSI reference resource corresponds to a CSI in the second time window.

In a possible embodiment, a start time of the fourth time unit is later than the end time of the first time unit, and/or an end time of the fourth time unit is earlier than a start time of the second time window.

In a possible embodiment, a start time of the fourth time unit is later than a start time of the second time window, the first time unit is spaced apart from the fourth time unit by a third difference, the second time unit is spaced apart from the fourth time unit by a fourth difference, and the third difference is greater than or equal to the fourth difference.

For example, the third difference is predefined, or indicated by the network device, or determined according to capability information of a terminal device; and/or the fourth difference is predefined, or indicated by the network device, or determined according to the capability information of the terminal device.

In a possible embodiment, an index S1 of the fourth time unit satisfies the following expression:

$$S1 = n - n_{CSI\_ref} - K_{offset} \cdot \frac{2^{\mu_{DL}}}{2^{\mu_{K_{offset}}}} - s_{offset};$$

where $n$ is determined according to a third time unit, and the third time unit is used for sending the CSI in the second time window; $K_{offset}$ is configured by a higher layer parameter; $\mu_{K_{offset}}$ represents a subcarrier spacing (SCS) corresponding to $K_{offset}$; $\mu_{DL}$ represents an SCS for downlink; $s_{offset}$ represents a time unit offset, and $s_{offset}$ is predefined, or indicated by the network device, or determined according to capability information of a terminal device.

In a possible embodiment, an index S1 of the fourth time unit satisfies the following expression:

$$S1 = n - n'_{CSI\_ref} - K_{offset} \cdot \frac{2^{\mu_{DL}}}{2^{\mu_{K_{offset}}}};$$

where n is determined according to a third time unit, and the third time unit is used for sending the CSI in the second time window; $K_{offset}$ is configured by a higher layer parameter; $\mu_{K_{offset}}$ represents an SCS corresponding to $K_{offset}$; $\mu_{DL}$ represents an SCS for downlink; a difference between $n'_{CSI\_ref}$ and $n_{CSI\_ref}$ is $S \cdot 2^{\mu DL}$, and S is a positive integer greater than or equal to 0; for example, S is predefined, or indicated by the network device, or determined according to capability information of a terminal device.

In a possible embodiment, the method further includes: receiving CSI report configuration information from the network device, where no CSI resource configuration information is associated with the CSI report configuration information. Even if no CSI resource configuration information is associated with the CSI report configuration information, the terminal device can predict the second channel information according to the first channel information, which helps to improve network performance.

In a possible embodiment, the method further includes: receiving CSI report configuration information from the network device, where the CSI report configuration information is associated with CSI resource configuration information.

In a possible embodiment, the CSI resource configuration information is non-zero power channel state information reference signal (NZP CSI-RS) resource configuration information, and the method further includes: determining the number of ports corresponding to the second channel information according to the NZP CSI-RS resource configuration information.

In a possible embodiment, the CSI in the second time window is contained in a second CSI report, and a CSI computation time requirement of the second CSI report is different from a CSI computation time requirement of the first CSI report. For example, the first CSI report carries layer 1 reference signal received power (L1-RSRP) or layer 1 signal to interference plus noise ratio (L1-SINR).

In a possible embodiment, the number of ports corresponding to the first channel information is the same as the number of ports corresponding to the second channel information.

It should be noted that, the "CSI in the second time window is contained in the second CSI report" involved in the first aspect and each embodiment of the first aspect can be understood as that: the second CSI report includes the CSI in the second time window, that is, the second CSI report is a report that contains or carries the CSI in the second time window.

In a second aspect, the disclosure provides an apparatus for obtaining channel information. The apparatus includes a communication unit and a processing unit. The communication unit is configured to receive indication information from a network device, the indication information indicating predicted channel information. The processing unit is configured to determine second channel information according to first channel information, the first channel information including at least one channel information in a first time window, the second channel information including at least one channel information in a second time window, and an end time of the first time window being earlier than a start time of the second time window.

In a third aspect, the operations of the method in the first aspect are applied to a terminal device.

In a fourth aspect, the disclosure provides a terminal device. The terminal device includes a processor, a memory, and computer programs or instructions stored in the memory. The computer programs or instructions, when executed by the processor, are operable to execute the operations of the method in the first aspect.

In a fifth aspect, the disclosure provides a chip. The chip includes a processor configured to execute the operations of the method in the first aspect.

In a sixth aspect, the disclosure provides a chip module. The chip module includes a communication interface and a chip. The chip includes a processor configured to execute the operations of the method in the first aspect.

In a seventh aspect, the disclosure provides a computer-readable storage medium. The computer-readable storage medium stores computer programs or instructions which, when executed, are operable to execute the operations of the method in the first aspect.

In an eighth aspect, the disclosure provides a computer program product. The computer program product includes computer programs or instructions which, when executed, are operable to execute the operations of the method in the first aspect.

BRIEF DESCRIPTION OF THE DRAWINGS

FIG. 1 is an architecture schematic diagram illustrating a communication system of the disclosure.
FIG. 2 is an example diagram illustrating a relationship between two time windows.
FIG. 3 is a schematic diagram illustrating a possible time unit relationship provided in the disclosure.
FIG. 4 is a schematic flowchart illustrating a method for obtaining channel information provided in the disclosure.
FIG. 5 is an example diagram illustrating a relationship among a first time unit, a second time unit, and a first time window provided in the disclosure.
FIG. 6 is an example diagram illustrating a relationship between a third time unit and a second time window provided in the disclosure.
FIG. 7 is an example diagram illustrating a relationship between a fourth time unit and the second time window provided in the disclosure.
FIG. 8 is a schematic structural diagram illustrating an apparatus for obtaining channel information provided in the disclosure.
FIG. 9 is a schematic structural diagram illustrating another apparatus for obtaining channel information provided in the disclosure.
FIG. 10 is a schematic structural diagram illustrating a chip module provided in embodiments of the disclosure.

DETAILED DESCRIPTION

The terms "first", "second" and the like of the disclosure are used to distinguish identical or similar items with basically the same functions and effects. Those skilled in the art can understand that the terms "first", "second" and the like do not limit the quantity and execution order, and these terms do not necessarily limit the difference. In addition, the term "and/or" is used to describe an association relationship of associated objects, and indicate that there can be three relationships. For example, "*A* and/or *B*" can means three situations, that is, *A* alone, both *A* and *B,* and *B* alone. The character "/" generally indicates that associated objects before and after the character are in an "or" relationship.

It is to be understood that, in the disclosure, the term "at least one" refers to one or more, and the term "multiple/a plurality of' refers to two or more. In addition, in the disclosure, the term "equal to" can be used in conjunction with the term "greater than" or the term "less than". When the term "equal to" and the term "greater than" are used in conjunction, a technical solution indicating "greater than" is adopted; when the term "equal to" and the term "less than" are used in conjunction, a technical solution indicating "less than" is adopted.

First, a system architecture involved in the disclosure is introduced below.

The disclosure can be applied to a fifth generation (5G) system, also known as a new radio (NR) system; alternatively, the disclosure can be applied to a sixth generation (6G) system, or a seventh generation (7G) system, or other future communication systems; alternatively, the disclosure can also be applied to a device to device (D2D) system, a machine to machine (M2M) system, a vehicle to everything (V2X), etc.

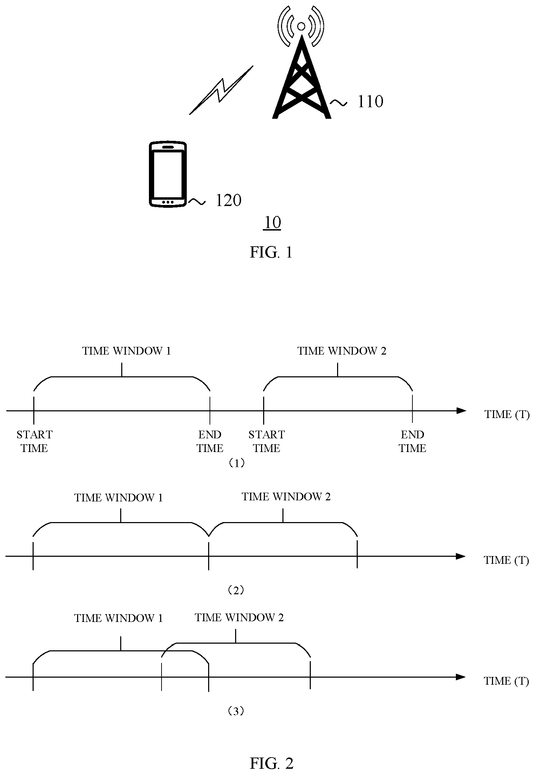

The disclosure can be applied to a system architecture in FIG. 1. A communication system 10 in FIG. 1 includes, but is not limited to, a network device 110 and a terminal device 120. The number and form of the devices in FIG. 1 are for illustrative purposes only, which does not constitute any limitation to embodiments of the disclosure. For example, the communication system 10 may include multiple terminal devices in practice.

The terminal device, also known as user equipment (UE), a mobile station (MS), mobile terminal (MT), etc., refers to a device that provides voice and/or data connectivity to a user, such as a handheld device with a wireless connection function, a vehicle-mounted device, etc. At present, the terminal device, for example, is a mobile phone, a tablet, a laptop, a personal digital assistant (PDA), a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc.

The network device, also known as access network device, refers to a radio access network (RAN) node (or device) that connects the terminal device to a wireless network, and can also be called a base station. At present, the RAN node, for example, is a next generation Node B (gNB), a transmission reception point (TRP), an evolved Node B (eNB), a radio network controller (RNC), a Node B (NB), a base station controller (BSC), a base transceiver station (BTS), a home base station (e.g., a home evolved Node B, or a home Node B, HNB), a base band unit (BBU), or a wireless fidelity (Wifi) access point (AP). In addition, in a network structure, the network device may include a centralized unit (CU) node, a distributed unit (DU) node, or an RAN device including a CU node and a DU node. It is to be noted that, the CU node and the DU node may also have other names, which is not limited in the disclosure.

In the disclosure, the terminal device may include a prediction module, such as an artificial intelligence (AI) module. The prediction module can be configured to predict downlink channel information. As an example, the prediction module is configured to predict or determine second channel information according to first channel information, so that the second channel information does not rely on a downlink reference signal, thereby saving a network resource occupied by the downlink reference signal. The prediction module has learning capabilities, such as machine learning (ML) and/or deep learning (DL) capabilities, to learn from the first channel information, so as to predict or determine the second channel information.

Optionally, the prediction module may be a software unit and/or a hardware unit that predicts channel information through some algorithms, such as a convolutional neural network algorithm, a deep neural network algorithm, etc. Optionally, the prediction module may be a chip, a chip module, etc.

Optionally, in the disclosure, the network device may include a prediction module to enable prediction of uplink channel information.

Further, in order to facilitate understanding of solutions of the disclosure by those skilled in the art, relevant words or terms involved in the disclosure will be introduced below.

I. Time Window and Time Unit

In the disclosure, a time window is used to describe a continuous period of time in time domain. Specifically, the time window includes a start time and an end time, and a time difference between the end time and the start time represents the size or length of the time window. Two adjacent time windows may have the same size or different sizes. The end time can also be described as an end time point or an end timestamp, etc., and the start time can also be described as a start time point or a start timestamp, etc.

In the disclosure, two time windows may not overlap, for example, there is a time interval between the two time windows. Alternatively, the two time windows may partially overlap. In the following, a relationship between the two time windows is illustrated by taking time window 1 and time window 2 as an example of the two time windows. As illustrated in FIG. 2 (1), there is a time interval between time window 1 and time window 2. As an example, the size of the time interval is a difference between the start time of time window 2 and the start time of time window 1. As another example, the size of the time interval is a difference between the end time of time window 2 and the end time of time window 1. As yet another example, the size of the time interval is a difference between the end time of time window 1 and the start time of time window 2. As yet still another example, the size of the time interval is a difference between the start time of time window 1 and the end time of time window 2. Specifically, the size of a time interval between two time windows in the disclosure may be defined according to actual needs, which is not limited herein. As illustrated in FIG. 2 (2), an example scenario where there is no time interval between time window 1 and time window 2 and time window 1 and time window 2 are continuous in time domain is provided, that is, the start time of time window 2 is the end time of time window 1. As illustrated in FIG. 2 (3), time window 1 and time window 2 partially overlap, for example, the start time of time window 2 is earlier than the end time of time window 1, and the start time of time window 2 is later than the start time of time window 1. The relationship between the two adjacent time windows in FIG. 2 is for illustrative purposes only, which does not constitute any limitation to the disclosure.

Further, in some embodiments, a time window includes one or more time units.

In the disclosure, a time unit serves as a time domain unit for signal transmission, which means that in time domain, a terminal device and a network device communicate with each other in units or granularities of the time units. Exemplarily, the time unit may be a radio frame, a subframe, a slot, a mini-slot, a symbol, etc. For example, the symbol may be an orthogonal frequency division multiplexing (OFDM) symbol, and the OFDM symbol may also be referred to as a time domain symbol.

Exemplarily, the time unit can also be classified as an uplink time unit or a downlink time unit according to a communication direction, where the uplink time unit is used for uplink communication, and the downlink time unit is used for downlink communication. The time unit, for example, is a slot, the slot can be classified as an uplink slot or a downlink slot according to the communication direction. A basic time unit can also be classified as an uplink basic time unit or a downlink basic time unit according to the communication direction. Further, the basic time unit is classified as an uplink basic time unit, a downlink basic time unit, and a flexible basic time unit according to the communication direction, where the uplink basic time unit is used for uplink communication, the downlink basic time unit is used for downlink communication, and the flexible basic time unit is used for uplink communication or downlink communication by a terminal device or a network device according to actual needs. The basic time unit, for example, is a symbol, the symbol can be classified as an uplink symbol, a downlink symbol, or a flexible symbol according to the communication direction, and the flexible symbol can be used for either uplink communication or downlink communication, depending on actual needs.

Further, in some embodiments of the disclosure, the time unit includes one or more basic time units, and the basic time unit may also be described as a sub-time unit, etc. As an example, the time unit is a subframe, and the basic time unit can be a slot. That is, one subframe can include one or more slots, and the specific number of slots in a subframe is related to a subcarrier space (SCS). For instance, for an SCS of 15kHz, the length of a slot in time domain is 1ms, and a subframe can include 14 slots. As another example, the time unit is a slot, and the basic time unit can be a symbol. That is, one slot can include one or more symbols. For instance, a slot includes 14 symbols.

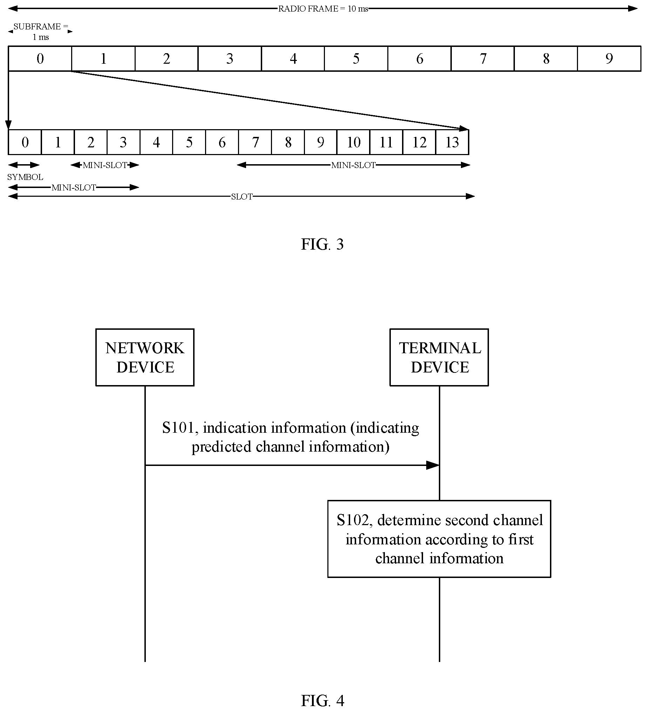

The following provides an example where the time unit is a radio frame and the basic time unit is a subframe. FIG. 3 is a schematic diagram illustrating a possible time unit relationship in the disclosure. As illustrated in FIG. 3, the length of a radio frame in time domain is 10ms, one radio frame can include 10 radio subframes, and the length of a radio subframe in time domain is 1ms.

In the disclosure, two time units may not overlap, for example, there is a time interval between two time units. The time interval between two time units and the time interval between two time windows are similar in principle. Alternatively, there is no time interval between two time units, for example, the two time units are continuous in time domain, that is, an end time of a time unit is a start time of another time unit.

II. Channel Information

In the disclosure, channel information can be used to characterize channel characteristics or features. For example, the channel information may be channel matrix information, and/or channel state information (CSI), and/or channel feature vector. Alternatively, the channel information can also be a CSI report. Alternatively, the channel information can also be time-domain information of a channel, frequency-domain information of a channel, time-frequency domain channel information, delay-Doppler domain channel information, etc., which is not limited herein. The channel matrix information and the CSI will be described below.

1. Channel Matrix Information

In the disclosure, channel matrix information can be used to describe information related to a channel matrix. For example, the channel matrix information may include one or more of the following: a channel matrix $H$, an equivalent channel matrix, a precoding matrix $W$ (the precoding matrix $W$ can be derived from the channel matrix $H$), a right singular vector $V$ of the channel matrix $H$, an eigenvector $v_i$ of a square matrix $H^T H$, a vector associated with the channel matrix $H$ (e.g., a vector of the channel matrix $H$ under certain deformation, etc).

(1) Channel Matrix $H$, Equivalent Channel Matrix, and Precoding Matrix $W$

In a multiple input multiple output (MIMO) system where a transmitter has $a$ antennas and a receiver has b antennas, a channel model of an MIMO channel can be expressed as:

$$r = Hs + n_0;$$

where r represents a received signal vector after passing through the MIMO channel; s represents a transmitted signal vector of the transmitter; $H$ represents the $b \times a$ channel matrix for the MIMO channel; $n_0$ represents an additive noise vector. It is to be noted that, for the case where $a=1$ and $b=1$, that is, the transmitter and the receiver each have one antenna, $H$ can also be used to represent a $1 \times 1$ channel matrix.

In a precoding method, the transmitter can optimize a spatial characteristic of the transmitted signal vector according to the channel matrix $H$ by using the precoding method, so that a spatial distribution characteristic of the transmitted signal vector matches the channel matrix $H$, thereby effectively reducing dependence on a receiver algorithm and simplifying the receiver algorithm. The system performance can be enhanced significantly through precoding.

Precoding may be performed using linear or nonlinear methods. Due to complexity and other factors, only linear precoding is generally considered in current wireless communication systems. After precoding, the channel model of an MIMO signal can be expressed as:

$$r = HWs + n_0;$$

where $W$ represents a precoding matrix.

In a multiple user MIMO (MU-MIMO) system, the receiver is unable to perform channel estimation for signals intended for other devices, and therefore, transmitter precoding can effectively suppress multi-user interference. It is evident that, it is beneficial for the system if the transmitter knows the channel matrix and uses appropriate precoding to process it.

In addition, in the precoding method, the precoding matrix $W$ and the channel matrix $H$ jointly determine an equivalent channel matrix (e.g., $H$ - $W$), and the equivalent channel matrix determines channel characteristics/features, etc. In addition, in some cases, the precoding matrix $W$ can be derived from the channel matrix $H$, for example, the precoding matrix $W$ is a matrix of the channel matrix $H$ under a certain transformation.

(2) Right Singular Vector $V$ of Channel Matrix $H$ and Eigenvector $v_i$ of Square Matrix $H^T H$

The decomposition of singular values of the channel matrix $H$ can be expressed as:

$$H = U \sum V^T;$$

where $U = [u_1, u_2, ... u_b]$ represents a $b \times b$ orthogonal matrix or a $b \times b$ unitary matrix;
$V = [v_1, v_2, ..., v_a]$ represents a $a \times a$ orthogonal matrix or a $a \times a$ unitary matrix, and column vectors in $V$ can be referred to as right-singular vectors of the channel matrix $H$; $\sum$ represents an $a \times a$ diagonal matrix, and elements on the diagonal are $p = \min(b, a)$ singular values (i.e., $\sigma_1, \sigma_2, ..., \sigma_p$) of the channel matrix $H$, and these singular values are arranged in descending order, that is,

$$\sigma_1 > \sigma_2 > ... > \sigma_p.$$

An $a \times a$ square matrix $H^T H$ is obtained by multiplying the conjugate transpose $H^T$ of the channel matrix $H$ by the channel matrix $H$, and eigendecomposition is performed on the square matrix to obtain an eigenvalue and an eigenvector expressed as:

$$(H^T H)v_i = \lambda_i v_i, i \in [1, a];$$

where $\lambda_l$ represents the eigenvalue of the square matrix $H^T H$; $v_i$ represents the eigenvector of the square matrix $H^T H$.

$(H^T H)v_i = {}^V\Sigma {}^{2VT}$ is derived from $H = U\Sigma^{VT}$, and therefore, the eigenvector of the square matrix $H^T H$ also represents the column vectors in *V*. In other words, all eigenvectors of the square matrix $H^T H$ can form *V*, and the eigenvector of the square matrix $H^T H$ can be the right singular vector of the channel matrix *H*.

2. CSI

In the disclosure, CSI can be used to describe information related to channel quality. For example, the CSI describes the propagation process of a wireless signal between a transmitter and a receiver, including effects of distance, scattering, fading, etc. on the signal. For downlink transmission, the CSI can be used by a terminal device to provide feedback on downlink channel quality to a network device, so that the network device performs beam management, mobility management, or other processing according to the CSI. The CSI sent by the terminal device to the network device may be carried in a CSI report. For example, the CSI also includes at least one of a CSI reference signal (CSI-RS) resource indicator (CRI) index, a rank indicator (RI) index, a channel quality indicator (CQI) index, a precoding matrix indicator (PMI) index, a layer indicator (LI) index, layer 1 reference signal received power (L1-RSRP), or layer 1 signal to interference plus noise ratio (L1-SINR).

In the disclosure, the terminal device obtains channel information by performing channel measurement through a downlink reference signal. The "measurement" herein can also be described as evaluation, detection, or estimation, etc. The downlink reference signal may include, but is not limited to, a CSI-RS, a synchronization signal block (SSB), or physical broadcast channel (PBCH) demodulation reference signal (DMRS), etc. As an example, the terminal device obtains channel matrix information by performing downlink channel measurement according to a CSI-RS, so as to obtain CSI according to the channel matrix information.

III. CSI Report

In the disclosure, a CSI report (or CSI-report) is used to report CSI. For example, the CSI report may include at least one of L1-RSRP, L1-SINR, CSI-related information, etc. Specifically, in some embodiments, the CSI report is configured by a higher layer parameter *CSI-ReportConfig* (i.e., CSI report configuration information). The *CSI-Report-Config* may be configured by a higher layer parameter *CSI-MeasConfig,* where the *CSI-MeasConfig* may indicate or include the following two higher layer parameters: *CSI-ReportConfig* and *CSI ResourceConfig* (i.e., CSI resource configuration information).

The *CSI-ReportConfig* may indicate or include *CSI-ResourceConfigId.* Through the *CSI-ResourceConfigId,* the *CSI-ReportConfig* can be associated with *CSI ResourceConfig,* or the *CSI-ResourceConfig* can be associated with *CSI-ReportConfig.* The association herein may also be described as mapping or correspondence, etc. In the disclosure, *CSI-ReportConfig* indicating or including *CSI-ResourceConfigId* can be understood as that *CSI-ReportConfig* has associated *CSI-ResourceConfig; CSI-ReportConfig* not indicating or including *CSI-ResourceConfigId* can be understood as that *CSI-ReportConfig* has no associated *CSI-ResourceConfig.*

The *CSI-ResourceConfig* can be used for configuring a CSI-RS resource for CSI measurement. The *CSI ResourceConfig* can configure a resource set (e.g., *ResourceSet),* where the *ResourceSet* includes one or more CSI-RS resources (e.g., *CSI-RS-Resource*).

The *CSI ResourceConfig* may indicate or include an NZP-CSI-RS resource set *(NZP-CSI RS ResourceSet),* or a CSI interference measurement (CSI-IM) resource set (*CSI-IM-ResourceSet),* or an SSB resource set (*SSB-Resource-Set).*

The *NZP-CSI RS-ResourceSet* can be used for channel measurement and/or interference measurement; the *CSI IM ResourceSet* can be used for interference measurement; the *SSB-ResourceSet* can be used for channel measurement.

The type of the CSI-RS resource may be periodic, semi-persistent, or aperiodic.

*ReportConfigType* in the *CSI-ReportConfig* can be used for indicating the report type of a CSI report, and the report type of the CSI report may be periodic CSI reporting, aperiodic CSI reporting, or semi-persistent CSI reporting. The CSI report may be transmitted via a physical uplink control channel (PUCCH) or a physical uplink shared channel (PUSCH).

1. Timing for reporting CSI report

The timing for reporting a CSI report will be depicted below by taking a slot as an example of the time unit and a symbol as an example of the basic time unit.

When the terminal device receives at least one transmission occasion no later than a CSI reference resource, the terminal device may report a CSI report; otherwise, the terminal device will not report a CSI report. The transmission occasion is a CSI-RS transmission occasion for channel measurement, and/or a CSI-IM occasion and/or a CSI-RS occasion for interference measurement.

The CSI reference resource is defined as follows.

In the frequency domain, the CSI reference resource is defined by a group of downlink physical resource blocks corresponding to the band to which the derived CSI relates.

In the time domain, a CSI report is reported in an uplink slot $n'$ (i.e., an index of the uplink slot is denoted as $n'$), and a time domain position of a CSI reference resource corresponding to the CSI report is a single downlink slot, and an index of the single downlink slot can be expressed as $n - n_{CSI\_ref} - K_{offset} \cdot \dfrac{2^{\mu_{DL}}}{2^{\mu_{K_{offset}}}}$ , where $\mu_{K_{offset}}$ represents a subcarrier spacing (SCS) corresponding to $K_{offset}$; $\mu_{DL}$ represents an SCS for downlink.

$K_{offset}$ may be configured by a higher layer parameter, and its unit can be milliseconds (ms). For example, $K_{offset}$ is configured by *CellSpecific_Koffset,* or the value of $K_{offset}$ is equal to *CellSpecific_Koffset - UESpecific_Koffset* if a media access control-control element (MAC-CE) provides *UESpecific Koffset.*

A slot $n$ (i.e., an index of the slot is denoted as $n$ ) is related to an uplink slot $n'$. For instance, the slot $n$ is a downlink slot corresponding to the uplink slot $n',$ and the relationship between the two slots can be expressed as:

$$n = \left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \right\rfloor \cdot 2^{\mu_{UL}} ;$$

where $\lfloor \ \rfloor$ represents a floor function (rounding down to the nearest integer); $\mu_{UL}$ represents an SCS for uplink; $N^{CA}_{slot,offset}$ and $\mu_{offset}$ can be determined according to a higher layer parameter *ca-SlotOffset.*

For periodic and semi-persistent CSI reporting, if a single CSI-RS/SSB resource is configured for channel measurement, $n_{CSI\_ref}$ is the smallest value greater than or equal to $4 \cdot 2^{\mu_{DL}}$ and is a valid downlink slot; or, if multiple CSI-RS/SSB resources are configured for channel measurement, $n_{CSI\_ref}$ is the smallest value greater than or equal to $5 \cdot 2^{\mu_{DL}}$ and is a valid downlink slot. $\mu_{DL}$ represents an SCS for downlink.

For aperiodic CSI reporting, if a terminal device is indicated by downlink control information (DCI) to report a CSI report in the same slot as a CSI request, $n_{CSI\_ref}$ is such that a reference resource is in the same valid downlink slot as the corresponding CSI request. Otherwise, $n_{CSI\_ref}$ is the smallest value greater than or equal to $\left\lfloor Z' / N^{slot}_{symb} \right\rfloor$, such that slot $n - n_{CSI\_ref}$ corresponds to a valid downlink slot, where $Z'$ corresponds to a CSI processing time requirement for the CSI report, and $N^{slot}_{symb}$ represents the number of symbols in a slot.

When periodic or semi-persistent CSI-RS/CSI-IM/SSB resource is used for channel/interference measurements, the terminal device is not expected to measure channel/interference on the CSI-RS/CSI-IM/SSB resource whose last symbol is received up to $Z'$ symbols before transmission time of the first symbol of the aperiodic CSI reporting. Optionally, the last symbol of the CSI-RS/CSI-IM/SSB resource is the last OFDM symbol of the CSI-RS/CSI-IM/SSB resource, and/or the first symbol of the aperiodic CSI reporting is the first OFDM symbol of the aperiodic CSI reporting.

The above valid downlink slot may include at least one downlink or flexible symbol configured by a higher layer parameter, and does not fall within a configured measurement gap for the terminal device. If there is no valid downlink slot for a CSI reference resource corresponding to a CSI report, CSI reporting is omitted by the terminal device in the uplink slot $n'$.

It is to be noted that, the relevant contents/concepts/definitions/explanations in "1. Timing for reporting CSI report" can be found in detail in the corresponding chapters of the 3GPP standard protocol 38.214, which is not limited herein. In addition, the relevant contents/concepts/definitions/explanations in "1. Timing for reporting CSI report" may also be modified in accordance with modification/change of the standard protocol 38.214. Those skilled in the art can also deduce/obtain modified contents in combination with the relevant contents/concepts/definitions/explanations in "1. Timing for reporting CSI report". Therefore, the modified contents are also within the protection scope of claims of the disclosure, which will not be repeated herein.

2. Information in CSI report

The CSI report may include at least one of the following information: L1-RSRP, L1-SINR, or CSI-related information, etc. The CSI-related information may include at least one of the following information: CSI-RS resource indicator (CRI), SS/PBCH block resource indicator (SSBRI), rank indicator (RI), precoding matrix indicator (PMI), channel quality indicator (CQI), or layer indicator (LI), etc.

It is to be noted that, the CRI (or SSBRI) can represent a CSI-RS (or SSB) resource recommended (or selected) by a terminal device. Specifically, one CSI-RS (or SSB) resource can represent a beam or an antenna direction.

The RI can represent the number of layers recommended (or selected) by a terminal device. The number of layers is for determining which codebook is used. Specifically, each number of layers corresponds to a codebook, and a codebook is composed of one or more codewords. For example, there can be a codebook for two layers or a codebook for one layer.

The PMI can represent an index of a codeword in the codebook recommended (or selected) by a terminal device, or quantized precoding information. Specifically, one codeword corresponds to one precoding matrix. The RI and the PMI can collectively represent the number of layers and the precoding matrix recommended by a terminal device.

The CQI can represent the quality of a current channel fed back by a terminal device to a network device. The terminal device needs to calculate the CQI.

3. CSI processing unit (CPU) occupied by CSI report

The CPU occupied by the CSI report will be depicted below by taking a slot as an example of the time unit and a symbol as an example of the basic time unit. The symbol is, for example, an OFDM symbol. In the following, the symbol and the OFDM symbol can be interchanged.

(1) Meaning of CPU

A terminal device can indicate the number $N_{CPU}$ of supported simultaneous CSI calculations with a higher layer parameter *simultaneousCSI-ReportsPerCC* in a component carrier (CC); a terminal device can indicate the number $N_{CPU}$ of supported simultaneous CSI calculations with a higher layer parameter *simultaneousCSI-ReportsAllCC* across all CCs. If a terminal device supports the simultaneous CSI calculations, the terminal device is said to have $N_{CPU}$ CPUs for processing the CSI report.

It is to be noted that, the CPUs occupied by the CSI report can represent the capability of a terminal device to process CSI. $N_{CPU}$ can be understood as the maximum number or total number of CPUs supported by a terminal device. Additionally, $N_{CPU}$ can be reported to a network device by a terminal device through a higher layer parameter (e.g., *simultaneousCSI-ReportsPerCC* and/or *simultaneousCSI-ReportsAllCC*).

If $L$ CPUs are occupied for calculation of CSI reports in a given OFDM symbol, a terminal device has $N_{CPU} - L$ unoccupied CPUs.

If $N$ CSI reports start occupying their respective CPUs on the same OFDM symbol on which $N_{CPU} - L$ CPUs are unoccupied, where the number of CPUs occupied by $n^{th}$ ($n = 0, ... , N$-1) CSI report is $O_{CPU}^{(n)}$, the terminal device is not required to update $N - M$ CSI reports with lowest priority, and $0 \leq M \leq N$ is the largest value such that $\sum_{n=0}^{M-1} O_{CPU}^{(n)} \leq N_{CPU} - L$ holds.

As an example, a network device configures three CSI reports for a terminal device, including CSI report 0, CSI report 1, and CSI report 2. Among priorities of the three CSI reports, the priority of CSI report 0 is higher than the priority of CSI report 1, and the priority of CSI report 1 is higher than the priority of CSI report 2. In the case where the terminal device has 10 unoccupied CPUs, if CSI report 0 occupies 5 CPUs (i.e., $O_{CPU}^{(0)} = 5$), CSI report 1 occupies 3 CPUs (i.e., $O_{CPU}^{(1)} = 3$), and CSI report 2 occupies 5 CPUs (i.e., $O_{CPU}^{(2)} = 5$), since 5+3+5>10, the terminal device is not required to update CSI report 2.

(2) The number $O_{CPU}$ of CPUs occupied by CSI report can be as follows:

1) If a higher layer parameter *reportQuantity* in *CSI-ReportConfig* is set to 'none' and a higher layer parameter *trs-Info* is configured in *CSI RS ResourceSet,* $O_{CPU} = 0$. That is, the number of CPUs occupied by the CSI report is 0.

2) If the higher layer parameter *reportQuantity* in *CSI-ReportConfig* is set to 'cri-RSRP', 'ssb-Index-RSRP', 'cri-SINR', 'ssb-Index-SINR', or 'none' (in this case, the higher layer parameter *trs-Info* in *CSI RS-ResourceSet* is not configured), $O_{CPU} = 1$. That is, the number of CPUs occupied by the CSI report is 1.

3) If the higher layer parameter *reportQuantity* in *CSI-ReportConfig* is set to 'cri-RI-PMI-CQI', 'cri-RI-i1', 'cri-RI-i1-CQI', 'cri-RI-CQI', or 'cri-RI-LI-PMI-CQI', then:

- if max $(\mu_{PDCCH}, \mu_{CSI-RS}, \mu_{UL}) < 3$, a CSI report is aperiodically triggered without transmitting a PUSCH with either transport block or HARQ-ACK or both when L = 0 CPUs are occupied, where the CSI corresponds to a single CSI with wideband frequency-granularity and to at most 4 CSI-RS ports in a single resource, and where *codebook-Type* is set to 'type1-SinglePanel' or *reportQuantity* is set to 'cri-RI -CQI', then $O_{CPU} = N_{CPU}$. That is, the number of CPUs occupied by the CSI report is the total number of CPUs reported by the terminal device. The $\mu_{PDCCH}$ corresponds to a subcarrier spacing of a PDCCH transmitting DCI, the $\mu_{UL}$ corresponds to a subcarrier spacing of a PUSCH carrying CSI, and the $\mu_{CSI-RS}$ corresponds to a subcarrier spacing of an aperiodic CSI-RS triggered by DCI.
- if *codebookType* in the *CSI-ReportConfig* corresponding to a CSI report is set to 'type1-SinglePanel', and a corresponding CSI-RS resource set for channel measurement is configured with 2 resource groups, *N* resource pairs, and *M* resources for single-site transmission assumption, then $O_{CPU} = 2N + M$. That is, the number of CPUs occupied by the CSI report is *2N+M.*
- otherwise, $O_{CPU} = K_s$, where $K_s$ is the number of NZP-CSI-RS resources (also known as channel measurement resources) in *NZP-CSI-RS-ResourceSet* for channel measurement. That is, the number of CPUs occupied by the CSI report is the number of channel measurement resources associated with the CSI report.

(3) The number of OFDM symbols occupied by CPU

1) For a CSI report with *CSI-ReportConfig* with the higher layer parameter *reportQuantity* not set to 'none', the CPU(s) are occupied by the CSI report for a number of OFDM symbols as follows:

- a periodic or semi-persistent CSI report (excluding an initial semi-persistent CSI report on PUSCH after PDCCH triggering the report) occupies CPU(s) from the first OFDM symbol of the earliest one of each CSI-RS/CSI-IM/SSB resource for channel or interference measurement, respective latest CSI-RS/CSI-IM/SSB occasion no later than the corresponding CSI reference resource, until the last OFDM symbol of a reporting resource, where the reporting resource is PUSCH/PUCCH carrying the periodic or semi-persistent CSI report.
- an aperiodic CSI report occupies CPU(s) from the first OFDM symbol after the PDCCH triggering the aperiodic CSI report until the last OFDM symbol of a reporting resource, where the reporting resource is PUSCH carrying the aperiodic CSI report.
- an initial semi-persistent CSI report on PUSCH after the PDCCH trigger occupies CPU(s) from the first OFDM symbol after the PDCCH until the last OFDM symbol of a reporting resource, where the reporting resource is PUSCH carrying the initial semi-persistent CSI report.

2) For a CSI report with *CSI-ReportConfig* with the higher layer parameter *reportQuantity* set to 'none' and *CSI-RS-ResourceSet* with the higher layer parameter *trs-Info* not configured, the CPU(s) are occupied by the CSI report for a number of OFDM symbols as follows:

- a semi-persistent CSI report (excluding an initial semi-persistent CSI report on PUSCH after the PDCCH triggering the report) occupies CPU(s) from the first OFDM symbol of the earliest one of each transmission occasion of periodic or semi-persistent CSI-RS/SSB resource for channel measurement for L1-RSRP computation, until $Z_3'$ OFDM symbols after the last OFDM symbol of the latest one of the CSI-RS/SSB resource for channel measurement for L1-RSRP computation in each transmission occasion.
- an aperiodic CSI report occupies CPU(s) from the first OFDM symbol after the PDCCH triggering the CSI report until the last OFDM symbol between $Z_3$ OFDM symbols after the first OFDM symbol after the PDCCH triggering the CSI report and $Z_3'$ OFDM symbols after the last OFDM symbol of a measurement resource, where the measurement resource is the latest one of each CSI-RS/SSB resource for channel measurement for L1-RSRP computation.

It is to be noted that, the relevant contents/concepts/definitions/explanations in "3. CSI processing unit (CPU) occupied by CSI report" can be found in detail in the corresponding chapters in the 3GPP standard protocol 38.214, which is not limited herein. In addition, the relevant contents/concepts/definitions/explanations in "3. CSI processing unit (CPU) occupied by CSI report" may also be modified in accordance with modification/change of the standard protocol 38.214. Those skilled in the art can also deduce/obtain modified contents in combination with the relevant contents/concepts/-definitions/explanations in "3. CSI processing unit (CPU) occupied by CSI report". Therefore, the modified contents are also within the protection scope of the disclosure, which will not be repeated herein.

4. CSI computation time requirement for CSI report

The CPU occupied by the CSI report will be depicted below by taking a slot as an example of the time unit and a symbol as an example of the basic time unit.

The CSI computation time requirement can also be described as CSI processing time requirement, CSI computation delay requirement, CSI processing delay requirement, etc.

When the CSI request field on a DCI triggers a CSI report(s) on PUSCH, if the first uplink symbol to carry the CSI report(s) (including the effect of the timing advance) starts no earlier than at symbol $Z_{ref}$, and if the first uplink symbol to carry the $n^{th}$ CSI report (including the effect of the timing advance) starts no earlier than at symbol $Z'_{ref(n)}$, the terminal device shall provide a valid CSI report for the $n^{th}$ triggered report.

where $Z_{ref}$ is defined as the next uplink symbol with its cyclic prefix (CP) starting $T = (Z)(2048 + 144) \cdot \kappa 2^{-\mu} \cdot T_c + T_{switch}$ after the end of the last symbol of the PDCCH triggering the CSI report(s).

where $Z'_{ref(n)}$ is defined as the next uplink symbol with its CP starting $T' = (Z')(2048 + 144) \cdot \kappa 2^{-\mu} \cdot T_c$ after the end of the last symbol of a measurement resource, where the measurement resource is in time of the latest of: aperiodic CSI-RS resource for channel measurement (when aperiodic CSI-RS is used for channel measurement for the $n^{th}$ triggered CSI report), aperiodic CSI-IM for interference measurement, and aperiodic NZP CSI-RS for interference measurement.

When the CSI request field on a DCI triggers a CSI report(s) on PUSCH, if the first uplink symbol to carry the CSI report(s) (including the effect of the timing advance) starts earlier than at symbol $Z_{ref}$, the terminal device may ignore the DCI if no HARQ-ACK or transport block is multiplexed on the PUSCH. In other words, the terminal device may not report the CSI report(s) triggered by the DCI.

When the CSI request field on a DCI triggers a CSI report(s) on PUSCH, if the first uplink symbol to carry the $n^{th}$ CSI report (including the effect of the timing advance) starts earlier than at symbol $Z'_{ref(n)}$: the terminal device may ignore the DCI if the number of triggered CSI reports is one and no HARQ-ACK or transport block is multiplexed on the PUSCH; otherwise, the terminal device is not required to update the CSI for the $n^{th}$ triggered CSI report.

In embodiments of the disclosure, the CSI computation time requirement for the CSI report may be determined according to $(Z, Z')$, where $Z = \max_{m=0,...,M-1}(Z(m))$, $Z' = \max_{m=0,...,M-1}Z'(m))$, and $M$ is the number of updated CSI report(s).

$(Z(m),Z'(m))$ corresponds to the $m^{th}$ updated CSI report and is defined as follows:

1) if max $(\mu_{PDCCH}, \mu_{CSI-RS}, \mu_{UL}) < 3$, and if a CSI report is aperiodically triggered without a PUSCH with either transport block or HARQ-ACK or both when $L = 0$ CPUs are occupied, and the CSI to be transmitted is a single CSI and corresponds to wideband frequency-granularity where the CSI corresponds to at most 4 CSI-RS ports in a single resource and where *codebookType* is set to 'typeI-SinglePanel' or where *reportQuantity* is set to 'cri-RI-CQI', $(Z(m), Z'(m))$ is defined as $(Z_1, Z'_1)$ of Table 1;

Table 1 CSI computation time requirement 1

| $\mu$ | $Z_1$ [symbols] | |
|---|---|---|
| | $Z_1$ | $Z'_1$ |
| 0 | 10 | 8 |
| 1 | 13 | 11 |
| 2 | 25 | 21 |
| 3 | 43 | 36 |

where $\mu$ is a subcarrier spacing and corresponds to min $(\mu_{PDCCH}, \mu_{CSI-RS}, \mu_{UL})$, $\mu_{PDCCH}$ corresponds to the subcarrier spacing of the PDCCH with which the DCI was transmitted, $\mu_{UL}$ corresponds to the subcarrier spacing of the PUSCH with which the CSI is carried, and $\mu_{CSI-RS}$ corresponds to the subcarrier spacing of the aperiodic CSI-RS triggered by the DCI.

2) if the CSI to be transmitted corresponds to wideband frequency-granularity where the CSI corresponds to at most 4 CSI-RS ports in a single resource and where *codebookType* is set to 'typeI-SinglePanel' or where *reportQuantity* is set to 'cri-RI-CQI', $(Z(m),Z'(m))$ is defined as $(Z_1, Z_1')$ of Table 2;

Table 2 CSI computation time requirement 2

| $\mu$ | $Z_1$ [symbols] | | $Z_2$ [symbols] | | $Z_3$ [symbols] | |
|---|---|---|---|---|---|---|
| | $Z_1$ | $Z_1'$ | $Z_2$ | $Z_2'$ | $Z_3$ | $Z_3'$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | min(44, $X_2$ + $KB_1$) | $X_2$ |
| 3 | 97 | 85 | 152 | 140 | min(97, $X_3$ + $KB_2$) | X3 |

where $\mu$ is a subcarrier spacing and corresponds to min ($\mu_{PDCCH}$, $\mu_{CSI-RS}$, $\mu_{UL}$).

3) if the CSI to be transmitted corresponds to wideband frequency-granularity where *reportQuantity* is set to 'ssb-Index-SINR' or 'cri-SINR', $(Z(m),Z'(m))$ is defined as $(Z_1, Z_1')$ of Table 2;

4) if *reportQuantity* is set to 'cri-RSRP' or 'ssb-Index-RSRP', $(Z(m),Z(m))$ is defined as $(Z_3, Z_3')$ of Table 2, where $X_\mu$ is determined according to terminal device reported capability *beamReportTiming*, and $KB_l$ is determined according to terminal device reported capability *beamSwitchTiming*;

5) otherwise, $(Z(m),Z(m))$ is defined as $(Z_2, Z_2')$ of Table 2.

It is to be noted that, the relevant contents/concepts/definitions/explanations in "4. CSI computation time requirement for CSI report" can be found in detail in the corresponding chapters in the 3GPP standard protocol 38.214, which is not limited herein. In addition, the relevant contents/concepts/definitions/explanations in "4. CSI computation time requirement for CSI report" may also be modified in accordance with modification/change of the standard protocol 38.214. Those skilled in the art can also deduce/obtain modified contents in combination with the relevant contents/concepts/definitions/explanations in "4. CSI computation time requirement for CSI report". Therefore, the modified contents are also within the protection scope of the disclosure, which will not be repeated herein.

IV Application Scenarios

The disclosure can be applied to an instant messaging scenario, for example, channel information can be predicted quickly in the instant messaging scenario. The disclosure can also be applied to a high-speed communication scenario, for example, predicted channel information can be obtained on a high-speed train. These two application scenarios are for illustration only and do not constitute any limitation to the disclosure. The disclosure can also be applied to other scenarios, such as a low-speed mobile scenario.

The method for obtaining channel information provided in the disclosure will be described below.

Referring to FIG. 4, FIG. 4 is a schematic flowchart illustrating a method for obtaining channel information provided in the disclosure. The method specifically includes the following operations.

S101, a network device sends indication information, and accordingly, a terminal device receives the indication information, where the indication information indicates predicted channel information.

In the disclosure, the indication information indicates predicted channel information, which can also be described as that: the indication information indicates prediction of channel information; or, the indication information indicates that unknown channel information is determined according to known channel information; or, the indication information indicates unknown channel information is predicted/determined according to known channel information; or, the indication information indicates that unknown channel information is predicted/determined according to other unknown channel information; or, the indication information indicates that channel information is obtained by calling/using a prediction module or a prediction function; or, the indication information indicates that channel information is determined by prediction, etc. In other words, the essence of the indication information is to indicate obtaining of the channel information without relying on a downlink reference signal, and other contents for describing the essence of the indication information are not exhaustively listed herein. For details of the channel information, reference can be made to the relevant description in "II. Channel Information", which will not be repeated herein.

The known channel information and the unknown channel information are defined relative to whether the channel information has been determined. The channel information that has been determined is referred to as known channel information, while the channel information that has not yet been determined is referred to as unknown channel information. As an example, the known channel information can be understood as previous channel information or historical channel information, and the unknown channel information can be understood as current channel information and/or future channel information. As another example, the known channel information can be understood as previous channel information and/or current channel information, and the unknown channel information can be understood as future channel information. It is to be noted that, in the disclosure, the current channel information can also be described as present channel information, ongoing channel information, or instant channel information, etc.

In some embodiments, the previous channel information, the current channel information, and the future channel information may be defined relative to a reception time of a measurement resource (e.g., CSI-RS resource and/or CSI-IM resource) associated with the indication information. Optionally, the reception time of the measurement resource associated with the indication information may be earlier than or equal to a reception time of the indication information, for example, channel information determined before the reception time of the measurement resource associated with the indication information is the previous channel information; channel information determined according to the measurement resource associated with the indication information is the current channel information; channel information in a certain period of time after the reception time of the measurement resource associated with the indication information (the period of time may include or exclude the reception time of the measurement resource associated with the indication information) is the future channel information. Optionally, the reception time of the measurement resource associated with the indication information may be later than the reception time of the indication information, for example, channel information determined before the reception time of the measurement resource associated with the indication information is the previous channel information; channel information determined (e.g., measured or predicted) according to the measurement resource associated with the indication information is the current channel information; channel information in a certain period of time after the reception time of the measurement resource associated with the indication information (the period of time may include or exclude the reception time of the measurement resource associated with the indication information) is the future channel information. The measurement resource associated with the indication information may be configured in configuration information, for instance, the configuration information may be *CSI MeasConfig* or *CSI-ReportConfig.* The reception time of the measurement resource may be understood as a reception moment of the measurement resource, or a time unit for receiving the measurement resource, or a basic time unit for receiving the measurement resource, etc.

In other embodiments, the previous channel information, the current channel information, and the future channel information may be defined relative to a time where the measurement resource associated with the indication information is located. The time where the associated measurement resource is located may be understood as a moment where the associated measurement resource is located, or a time unit where the associated measurement resource is located, or a basic time unit where the associated measurement resource is located, etc. The time where the associated measurement resource is located may also be understood as a time domain resource occupied by the associated measurement resource, such as a time unit occupied by the associated measurement resource or a basic time unit occupied by the associated measurement resource, etc. The time where the associated measurement resource is located, for example, is a time unit occupied by the associated measurement resource, the time unit occupied by the measurement resource associated with the indication information may be earlier than, equal to, or later than a time unit where the reception time of the indication information is located. For instance, channel information determined before a time unit occupied by the measurement resource associated with the indication information is the previous channel information; channel information determined according to the measurement resource associated with the indication information is the current channel information; channel information in a certain period of time after the time unit occupied by the measurement resource associated with the indication information is the future channel information. Exemplary, if the time unit is a slot, assuming that the time unit where the reception time of the indication information is located is slot 3 (i.e., an index of said slot is 3) and a slot occupied by the measurement resource associated with the indication information is slot 4, channel information determined in slot 3 and before in slot 3 is the previous channel information, channel information determined according to the measurement resource associated with the indication information is the current channel information, and channel information in a period of time from slot 5 to slot 7 is the future channel information.

In some embodiments, the network device carries the indication information in configuration information to send to the terminal device, which is beneficial to saving signaling overhead. The configuration information, for example, is *CSI-MeasConfig* or *CSI-ReportConfig.* The configuration information carrying the indication information may be the same as or different from the configuration information carrying the measurement resource. In other embodiments, the network device also carries the indication information in other information, where said other information is different from the configuration information and may be newly defined information or the existing information, which is not limited herein. The order in which the network device sends the configuration information and the indication information is not limited in the disclosure.

S 102, the terminal device determines second channel information according to first channel information.

In some embodiments, the first channel information can be understood as known channel information, while the second channel information can be understood as unknown channel information. As an example, if the first channel information is previous channel information and the second channel information is current channel information, the terminal device can predict the current channel information according to the previous channel information. In this case, the previous channel information is known channel information, and the current channel information is unknown channel information. As another example, if the first channel information is previous channel information and the second channel information is future channel information, the terminal device can predict the future channel information according to the previous channel information. In this case, the previous channel information is known channel information, and the future channel information is unknown channel information. As yet another example, if the first channel information is current channel information and the second channel information is future channel information, the terminal device can predict the future channel information according to the current channel information. In this case, the current channel information is known channel information, and the future channel information is unknown channel information. As yet still another example, if the first channel information is previous channel information and current channel information and the second channel information is future channel information, the terminal device can predict the future channel information according to the previous channel information and the current channel information. In this case, the previous channel information and the current channel information are known channel information, and the future channel information is unknown channel information.

In other embodiments, the first channel information can be understood as unknown channel information, and the second channel information can be understood as unknown channel information. As an example, if the first channel information is current channel information and the second channel information is future channel information, the terminal device can predict the future channel information according to the current channel information. In this case, the current channel information is unknown channel information, and the future channel information is also unknown channel information.

In the following, the first channel information and the second channel information will be described respectively in an exemplary scenario where the first channel information includes at least one channel information in a first time window, the second channel information includes at least one channel information in a second time window, and the first time window is earlier than the second time window.

1. First Channel Information

The first channel information includes at least one channel information in the first time window. In some embodiments, the at least one channel information in the first time window may be at least one channel matrix information determined (e.g., measured or predicted) in the first time window. In other embodiments, the at least one channel information in the first time window may be at least one CSI determined (e.g., measured or predicted) in the first time window. For example, one CSI is carried in one CSI report, or multiple CSIs are carried in a same CSI report. In other embodiments, the at least one channel information in the first time window may be at least one CSI report determined (e.g., measured or predicted) in the first time window. In other embodiments, the at least one channel information in the first time window may be at least one CSI report carried in the first time window, which can be understood as at least one CSI report reported in the first time window.

It is to be noted that, in the disclosure, the type of the at least one channel information in the first time window may be the same, for example, each of the at least one channel information in the first time window is CSI or channel matrix information; the type of the at least one channel information in the first time window may be different, for example, part of the at least one channel information in the first time window is CSI and the remaining is channel matrix information.

Optionally, the at least one channel information in the first time window may be all channel information in the first time window, or may be part of the channel information in the first time window. For example, there are 10 channel information in the first time window in total, the at least one channel information may be said 10 channel information, or 5 channel information of said 10 channel information, where said 5 channel information may meet a certain condition (e.g., the first 5 channel information in descending order, or the first 5 channel information in chronological order).

Optionally, the specific number of the at least one channel information in the first time window is determined according to one or more of the following: the number defined by the protocol (e.g., the protocol predefines the number of the at least one channel information in the first time window); indication of the network device (e.g., the network device can indicate the number of the at least one channel information in the first time window, so that the terminal device can determine the specific number of the at least one channel information in the first time window; the network device may explicitly or implicitly indicate the number of the at least one channel information in the first time window); or capability information of the terminal device (e.g., if the capability information of the terminal device indicates that the terminal device can support processing of 4 channel information, the number of the at least one channel information in the first time window is 4).

As an example, if the number indicated by the network device is 5, but the terminal device can support 4 channel information, the number of the at least one channel information in the first time window is 4.

2. Second Channel Information

The second channel information includes at least one channel information in the second time window. In some embodiments, the at least one channel information in the second time window may be at least one channel matrix information that needs to be predicted in the second time window. Optionally, the terminal device may determine at least one CSI in the second time window according to the at least one channel matrix information in the second time window, where one channel matrix information may correspond to one CSI. In other embodiments, the at least one channel information in the second time window may be at least one CSI that needs to be predicted in the second time window. One CSI may be carried in one CSI report, or multiple CSIs may be carried in a same CSI report. In other embodiments, the at least one channel information in the second time window may be at least one CSI report that needs to be predicted in the second time window.

It is to be noted that, in the disclosure, the type of the at least one channel information in the second time window may be the same, for example, each of the at least one channel information in the second time window is CSI or channel matrix information; the type of the at least one channel information in the second time window may be different, for example, part of the at least one channel information in the second time window is CSI and the remaining is channel matrix information.

Optionally, the specific number of the at least one channel information in the second time window is determined according to one or more of the following: the number defined by the protocol (e.g., the protocol predefines the number of the at least one channel information in the second time window); indication of the network device (e.g., the network device can indicate the number of the at least one channel information in the second time window, so that the terminal device can determine the specific number of the at least one channel information in the second time window); or capability information of the terminal device (e.g., if the capability information of the terminal device indicates that the terminal device can predict 4 channel information, the number of the at least one channel information in the second time window is 4).

As an example, if the number indicated by the network device is 5, but the terminal device can predict 4 channel information, the number of the at least one channel information in the second time window is 4.

The second time window may be later than the first time window. In other words, the first time window may be earlier than the second time window.

In some embodiments, the first time window being earlier than the second time window may be that an end time of the first time window is earlier than a start time of the second time window, which can be understood as that there is a time interval between the end time of the first time window and the start time of the second time window, and/or the end time of the first time window is earlier than the start time of the second time window. For example, a relationship between the first time window and the second time window can refer to a relationship between time window 1 and time window 2 in FIG. 2 (1). The end time of the first time window being earlier than the start time of the second time window can also be described as that the end time of the first time window is before the start time of the second time window; or in time domain, the end time of the first time window is before the start time of the second time window; or there is a time interval between the end time of the first time window and the start time of the second time window, and the time interval is not zero, etc.

In other embodiments, the first time window being earlier than the second time window may be that the end time of the first time window is the start time of the second time window. For example, the relationship between the first time window and the second time window can refer to a relationship between time window 1 and time window 2 in FIG. 2 (2).

In other embodiments, the first time window being earlier than the second time window may be that the start time of the first time window is earlier than the start time of the second time window, and the first time window and the second time window partially overlap. For example, the relationship between the first time window and the second time window can refer to a relationship between time window 1 and time window 2 in FIG. 2 (3).

In the case where the first channel information includes at least one channel information in the first time window and the second channel information includes at least one channel information in the second time window, the terminal device can determine the at least one channel information in the second time window according to the at least one channel information in the first time window. For example, if the first channel information includes 3 channel information in the first time window and the second channel information includes 2 channel information in the second time window, the terminal device can determine the 2 channel information in the second time window according to the 3 channel information in the first time window. Optionally, the terminal device determines at least one channel matrix information in the second time window according to at least one channel matrix information in the first time window, or the terminal device determines at least one CSI in the second time window according to at least one channel matrix information in the first time window. Optionally, the terminal device determines at least one CSI in the second time window according to at least one CSI in the first time window. Exemplarily, when obtaining at least one CSI in the second time window, the terminal device sends a CSI report including the at least one CSI in the second time window to the network device. The at least one CSI may be in multiple CSI reports, for instance, one CSI corresponds to one CSI report. In the case where the at least one CSI is in multiple CSI reports, the terminal device may report the multiple CSI reports in chronological order, or the terminal device may select from the multiple CSI reports a CSI report(s) for reporting, depending on the specific situation. Alternatively, the at least one CSI may be in one CSI report, for instance, multiple CSIs are carried in one CSI report.

In embodiments corresponding to FIG. 4, when receiving the indication information for predicting channel information, the terminal device predicts the second channel information according to the first channel information, thereby realizing channel information prediction, which can effectively reduce network overhead, and is beneficial to improving network performance and reducing power consumption of a terminal.

Optionally, for the operations at S101, the network device may send the indication information in method (1) or method (2) described below.

In method (1), the network device determines that the terminal device obtains channel information in a first obtaining method, and then sends indication information to the terminal device, where the indication information is used for indicating the terminal device to adopt the first obtaining method. The first obtaining method is that the terminal device predicts unknown channel information according to known channel information through a prediction module. As an example, the indication information is a bit, where the bit with a value of "1" means that the terminal device is indicated to adopt the first obtaining method, that is, indicating predicted channel information; and the bit with a value of "0" means that the terminal device is indicated to adopt a second obtaining method. The second obtaining method is that the terminal device determines channel information according to a downlink reference signal sent by the network device, that is, a current method for obtaining channel information by the terminal device, after receiving the downlink reference signal and a higher layer parameter *CSI-MeasConfig,* the terminal device obtains the channel information by performing downlink channel measurement on channels according to the downlink reference signal. For instance, the network device may determine channel information obtaining method adopted by the terminal device according to information such as a network load rate and/or a downlink resource occupancy rate.

In method (2): the network device determines whether to send indication information according to capability information of the terminal device. As an example, if the capability information of the terminal device indicates that the terminal device supports predicting channel information, or the capability information of the terminal device indicates that the terminal device includes a prediction module (the prediction module can predict unknown channel information according to known channel information), or the capability information of the terminal device indicates that the terminal device has the ability to predict channel information, the network device will send the indication information to the terminal device. As another example, if the capability information of the terminal device indicates that the terminal device does not support predicting channel information, or the capability information of the terminal device indicates that the terminal device does not include a prediction module, or the capability information of the terminal device indicates that the terminal device has no ability to predict channel information, the network device will not send the indication information to the terminal device.

The method (1) and the method (2) are for illustrative purposes only, and do not constitute any limitation to the disclosure.

In addition, in other embodiments of the disclosure, the network device may not send the indication information, and the terminal device determines the second channel information according to its own capability information and the first channel information. For example, if the terminal device supports predicting channel information, or includes a prediction module, or has the ability to predict unknown channel information according to known channel information, the terminal device can determine the second channel information according to the first channel information. The network device does not send the indication information, which is beneficial to saving signaling overhead and improving network performance.

Further, in some embodiments, the number of ports corresponding to the first channel information is the same as the number of ports corresponding to the second channel information. In an exemplary scenario where the first channel information includes at least one channel information in the first time window and the second channel information includes at least one channel information in the second time window, the number of ports corresponding to the at least one channel information in the first time window is the same as the number of ports corresponding to the at least one channel information in the second time window. It can be understood that, the number of ports corresponding to any channel information in the first time window is the same as the number of ports corresponding to any channel information in the second time window. For instance, taking one channel information in the first time window as an example, the number of ports corresponding to said channel information refers to: the number of ports of a CSI-RS resource for determining said channel information, or the number of ports of a CSI-RS for determining said channel information. For example, if the number of ports of the CSI-RS for determining said channel information is $P$, that is, $P$-port CSI-RS, the number of ports corresponding to the first channel information is $P$, and the number of ports corresponding to the second channel information is also $P$, where $P$ is, for example, in a value of 1, 2, 4, 8, 16, 24, 32, etc.

In addition, in other embodiments, the terminal device may also determine a CSI in the second time window according to the second channel information. As an example, the second channel information includes at least one channel matrix information in the second time window, and the terminal device determines the CSI in the second time window according to the at least one channel matrix information in the second time window. It should be noted that, the CSI in the second time window may be one or more CSIs in the second time window, which is not limited herein.

Optionally, the network device sends configuration information, and accordingly, the terminal device receives the configuration information. The configuration information may be *CSI-MeasConfig* or *CSI-ReportConfig*. The configuration information may carry the above-mentioned indication information or may not carry the above-mentioned indication information. For the case where the indication information is carried in other information, the order in which the configuration information and the indication information are sent is not limited in the disclosure. Optionally, the configuration information is *CSI-ReportConfig,* and *CSI-ReportConfig* may have associated *CSI-ResourceConfig* or may have no associated *CSI ResourceConfig.* A resource configured by the *CSI-ResourceConfig* may be used for channel measurement and/or interference measurement.

Case 1: *CSI-ReportConfig* has no associated *CSI-ResourceConfig.*

For case 1, the first channel information may include channel information associated with $M$ first CSI reports in the first time window, or may include channel information associated with $N$ CSI-RS resources in the first time window, where $M$ and $N$ are each a positive integer greater than or equal to 1.

The time relationship between reporting CSI and the first time window needs to be further standardized and slightly more specific.

Method 1: the first channel information includes channel information associated with $M$ first CSI reports in the first time window.

In the disclosure, a CSI report in the first time window is referred to as the first CSI report. The CSI report in the first time window may be obtained according to channel information in the first time window. The CSI report in the first time window may also be obtained according to channel information before the first time window. The CSI report in the first time window may also be obtained according to channel information in the first time window and channel information before the first time window. One channel information may correspond to one CSI report. For example, $M$ may have a value same as the number of at least one channel information in the first time window, or $M$ may have a value less than the number of at least one channel information in the first time window. The specific value of $M$ may be predefined by the protocol, or indicated by a network device, or determined according to capability information of a terminal device, or determined according to indication of the network device and the capability information, etc.

The first channel information includes channel information associated with M first CSI reports in the first time window, which can be understood as that the first channel information is channel information contained in the $M$ first CSI reports in the first time window, where the channel information may be, for example, one or more of RI, CQI, or PMI, etc; which can also be understood as that the first channel information is channel information corresponding to a CSI-RS associated with the $M$ first CSI reports in the first time window, that is, channel information corresponding to a CSI-RS for obtaining or determining the $M$ first CSI reports, for example, the channel information is channel matrix information.

Optionally, the $M$ first CSI reports are $M$ consecutive first CSI reports, which can be understood as $M$ first CSI reports reported continuously, while time units occupied by the $M$ first CSI reports are not necessarily continuous. Optionally, the $M$ first CSI reports correspond to NZP CSI-RS for channel measurement. For example, the first CSI report can be obtained by measuring according to the NZP CSI-RS. The number of ports of the NZP CSI-RS can also be a specific time-frequency resource combination, reference can be made to the number of ports of the above-mentioned CSI-RS. The number of ports of the NZP CSI-RS is the number of ports corresponding to the first channel information, that is, the number of ports corresponding to the second channel information. The number of ports of the NZP CSI-RS is $P$, which can also be described as $P$-port NZP CSI-RS.

Optionally, the first time window may include one or more time units, and the terminal device needs to determine a start time and/or an end time of the first time window, so as to obtain channel information associated with the M first CSI reports in the first time window. In the disclosure, the first time unit is used to limit a range of the start time of the first time window, and the second time unit is used to limit a range of the end time of the first time window. A time unit occupied by the earliest reported first CSI report among the M first CSI reports is no earlier than the first time unit, and a time unit occupied by the latest reported first CSI report among the M first CSI reports is no later than the second time unit, as such, the first time window can be no earlier than the first time unit, and/or the first time window can be no later than the second time unit. If the first time window includes one time unit, the first time unit and the second time unit are the same time unit; if the first time window includes multiple time units, the second time unit and the first time unit are different time units, and/or there is a time interval between the second time unit and the first time unit.

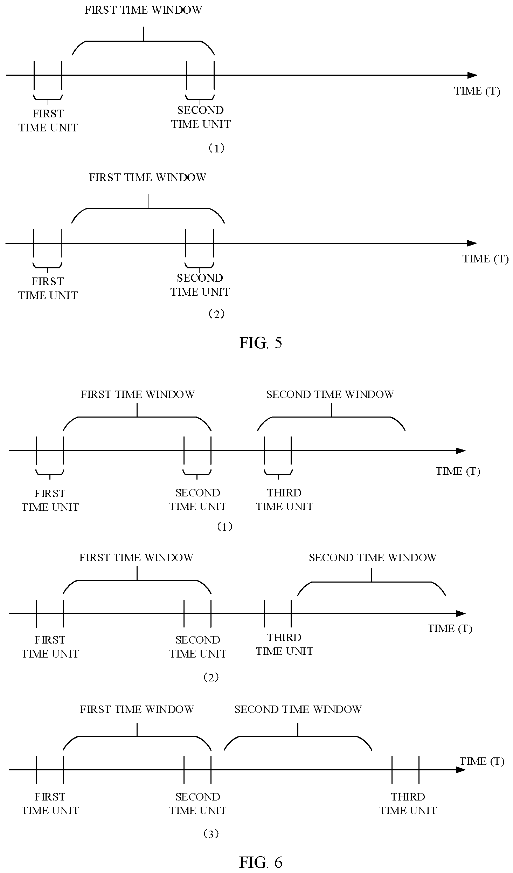

The first time window being no earlier than the first time unit can be that a start time of the first time window is no earlier than an end time of the first time unit, which can be understood as the start time of the first time window is the end time of the first time unit, or the start time of the first time window is later than the end time of the first time unit. The first time window being no later than the second time unit can be that an end time of the first time window is no later than an end time of the second time unit, which can be understood as the end time of the first time window is the end time of the second time unit, or the end time of the first time window is later than the end time of the second time unit. FIG. 5 is an example diagram illustrating a relationship among the first time unit, the second time unit, and the first time window provided in the disclosure. FIG. 5 (1) illustrates an example where the start time of the first time window is later than the end time of the first time unit, and the end time of the second time unit is the same as the end time of the first time window; FIG. 5 (2) illustrates an example where the start time of the first time window is later than the end time of the first time unit, and the end time of the second time unit is earlier than the end time of the first time window.

For method 1, the terminal device can determine at least one channel matrix information in the second time window according to channel information associated with M first CSI reports in the first time window, and further predict a CSI in the second time window according to the at least one channel matrix information in the second time window. Alternatively, the terminal device can predict a CSI in the second time window according to channel information associated with the M first CSI reports in the first time window. The CSI in the second time window predicted by the terminal device can be sent to the network device, so that the network device performs beam management, mobility management, rate matching, and other processing. For example, the terminal device sends the CSI in the second time window in a third time unit. That is, the terminal device sends a second CSI report in the third time unit, where the second CSI report includes the CSI in the second time window. That is, the third time unit is used for sending the second CSI report or the CSI in the second time window, or the third time unit is used for sending of the second CSI report or the CSI in the second time window. It can be understood that, the second CSI report corresponds to *CSI-ReportConfig,* that is, the second CSI report is a to-be-reported CSI report configured by *CSI-ReportConfig.* It is to be noted that, in the disclosure, the CSI in the second time window may be one or more, and is related to at least one channel information in the second time window. It can be understood that, the second CSI report includes the CSI in the second time window, which can also be described as that the CSI in the second time window is contained in the second CSI report, or the second CSI report includes/contains the CSI in the second time window, etc. An index of the third time unit in which the terminal device sends the second CSI report can be indicated by the network device, for example, the network device indicates the terminal device to send the second CSI report in slot n' (that is, the index of the slot is *n').*

On condition that the network device indicates the index of the third time unit, the terminal device can determine the range of the start time and/or the end time of the first time window according to the index of the third time unit.

Example 1: the third time unit is spaced apart from the first time unit by a first difference, and the first difference is an absolute difference. The first difference is predefined by the protocol, or indicated by the network device, or determined according to capability information of the terminal device. Alternatively, the first difference is greater than a first threshold, where the first threshold is indicated by the network device, or predefined by the protocol, or determined according to capability information of the terminal device. The terminal device can determine an index of the first time unit according to the index of the third time unit and the first difference, and further determine the range of the start time of the first time window. Exemplarily, taking a slot as an example of the time unit, the first difference can be expressed as $q,$ where $q$ is a positive integer, the third time unit can be expressed as slot $n$', and a slot index of the first time unit can be expressed as U= $n$' - $q$. Optionally, the network device may explicitly indicate the index of the first time unit. Optionally, the terminal device can determine the size of the first time window according to the index of the first time unit, the index of the third time unit, and the value of $M$, and further obtain the channel information associated with the $M$ first CSI reports in the first time window, so as to obtain the second CSI report and send the second CSI report in the third time unit.

Example 2: the third time unit is spaced apart from the second time unit by a second difference, and the second difference is an absolute difference. The second difference is predefined by the protocol, or indicated by the network device, or determined according to capability information of the terminal device. Alternatively, the second difference is greater than a second threshold, where the second threshold is indicated by the network device, or predefined by the protocol, or determined according to capability information of the terminal device. The terminal device can determine an index of the second time unit according to the index of the third time unit and the second difference, and further determine the range of the end time of the first time window. Exemplarily, taking a slot as an example of the time unit, the second difference can be expressed as $k,$ where $k$ is a positive integer less than or equal to $q,$ the third time unit can be expressed as slot $n$', and a slot index of the second time unit can be expressed as L= $n$' - $k$. Optionally, the network device may explicitly indicate the index of the second time unit. Optionally, the terminal device can determine the size of the first time window according to the index of the second time unit, the index of the third time unit, and the value of $M$, and further obtain the channel information associated with the $M$ first CSI reports in the first time window, so as to obtain the second CSI report and send the second CSI report in the third time unit.

It is to be noted that, on condition that the index of the third time unit is determined, that is, the time unit in which the terminal device sends the second CSI report is indicated, the terminal device can determine the index of the first time unit according to the first difference, and can determine the index of the second time unit according to the second difference.

Example 3: the third time unit is spaced apart from the first time unit by the first difference, the third time unit is spaced apart from the second time unit by the second difference, and the first difference and the second difference are each an absolute difference. The first difference is predefined by the protocol, or indicated by the network device, or determined according to capability information of the terminal device. Alternatively, the first difference is greater than the first threshold, where the first threshold is indicated by the network device, or predefined by the protocol, or determined according to capability information of the terminal device. The second difference is predefined by the protocol, or indicated by the network device, or determined according to capability information of the terminal device. Alternatively, the second difference is greater than the second threshold, where the second threshold is indicated by the network device, or predefined by the protocol, or determined according to capability information of the terminal device. Optionally, the network device may explicitly indicate the index of the first time unit and the index of the second time unit. Optionally, the terminal device can determine the range of the first time window according to the index of the first time unit, the index of the second time unit, and the index of the third time unit (optionally, the value of *M*), and further obtain the channel information associated with the *M* first CSI reports in the first time window, so as to obtain the second CSI report and send the second CSI report in the third time unit.

In some embodiments, the third time unit is within the second time window, which can be understood as that the terminal device can report the predicted second CSI report to the network device in the second time window. In this method, a start time of the third time unit is no earlier than a start time of the second time window, and/or an end time of the third time unit is no later than an end time of the second time window, for example, see FIG. 6 (1). In other embodiments, the third time unit is earlier than the second time window, that is, the terminal device can report the second CSI report to the network device before the start time of the second time window is reached. In this method, the end time of the third time unit is earlier than the start time of the second time window, and/or the start time of the third time unit is later than the end time of the second time unit, for example, see FIG. 6 (2). In other embodiments, the start time of the third time unit is later than the end time of the second time window, which can be understood as that the terminal device can report the second CSI report to the network device after the end time of the second time window, see FIG. 6(3).

For method 1, the terminal device may determine a CSI processing time corresponding to the second CSI report and a processing time requirement of the second CSI report.

The CSI processing time corresponding to the second CSI report:

The CSI processing time corresponding to the second CSI report can also be described as a CPU time required to be occupied by the second CSI report, or a CPU time corresponding to the second CSI report, etc. Optionally, the terminal device can determine the CSI processing time corresponding to the second CSI report according to a reference CSI report. The terminal device determines the reference CSI report from the M first CSI reports, and a difference between the second time unit and a time unit occupied by the reference CSI report is less than or equal to a threshold. It can be understood that, the essence of the reference CSI report is the first CSI report, and the time unit (e.g., slot) occupied by the first CSI report is closest to the second time unit, and/or the start time of the time unit occupied by the reference CSI report is earlier than the start time of the second time unit.

Furthermore, the CSI processing time corresponding to the second CSI report is a time interval from a first physical uplink channel resource to a second physical uplink channel resource in time domain. The first physical uplink channel resource is used for carrying the reference CSI report, that is, the first physical uplink channel resource is a physical uplink channel resource occupied by transmission of the reference CSI report. The second physical uplink channel resource is used for carrying the second CSI report, that is, the second physical uplink channel resource is a physical uplink channel resource for transmitting the second CSI report. A physical uplink channel may be a PUCCH or a PUSCH. The physical uplink channel resource is a resource occupied by the PUCCH or the PUSCH.

As an example, the time interval from the first physical uplink channel to the second physical uplink channel in time domain is introduced in an exemplary scenario where the first time unit and the second time unit are each a slot and the basic time unit is a symbol. Exemplarily, if the physical uplink channel occupies at least one symbol in time domain, the CSI processing time corresponding to the second CSI report is from the last symbol of the first physical uplink channel to the first symbol of the second physical uplink channel. As another example, if the first time unit and the second time unit are each a slot, and the physical uplink channel occupies at least one slot in time domain, the CSI processing time corresponding to the second CSI report is a slot interval between a slot(s) occupied by the first physical uplink channel and a slot(s) occupied by the second physical uplink channel.

Optionally, the number of CPUs corresponding to the second CSI report is R, where R is a positive integer, and R is predefined by the protocol, or indicated by the network device, or determined according to terminal capability.

It can be understood that, the CSI processing time corresponding to the second CSI report is a time occupied by a CPU corresponding to the second CSI report, such as the number of symbols occupied by the CPU or the number of OFDM symbols occupied by the CPU; the number of CPUs corresponding to the second CSI report represents how many CPUs are occupied by the second CSI report.

The processing time requirement for the second CSI report:
The processing time requirement for the second CSI report is different from a CSI processing time requirement for the first CSI report, the first CSI report carries L1-RSRP or L1-SINR. It can be understood that, the CSI processing time requirement for the first CSI report is related to L1-RSRP or L1-SINR, see the "4. CSI computation time requirement for CSI report". Optionally, the first CSI report carries CSI-related information. It can be understood that, the CSI processing time requirement for the first CSI report is related to the CSI-related information, that is, the "4. CSI computation time requirement for CSI report". Optionally, the CSI processing time requirement for the first CSI report carries compressed channel information, the compressed channel information refers to channel information obtained after compressing of channel information.

Method 2: the first channel information includes channel information associated with *N* CSI-RS resources in the first time window.

Exemplarily, $N$ may have a value same as the number of at least one channel information in the first time window, or $N$ may have a value less than the number of at least one channel information in the first time window. The specific value of $N$ may be predefined by the protocol, or indicated by the network device, or determined according to capability information of the terminal device, or determined according to indication of the network device and capability information, etc.

The channel information associated with the N CSI-RS resources may be understood as channel information obtained according to the $N$ CSI-RS resources. For instance, one channel information may be obtained according to one CSI-RS resource. Optionally, the $N$ CSI-RS resources are $N$ consecutive CSI-RS resources, that is, $N$ CSI-RS resources received continuously, while time units occupied by the $N$ CSI-RS resources are not necessarily continuous. Optionally, the $N$ CSI-RS resources are NZP CSI-RS resources for channel measurement, and the number of ports of the NZP CSI-RS resources can be understood as the number of ports occupied by the NZP CSI-RS resources. The number of ports of the NZP CSI-RS resources is the number of ports corresponding to the first channel information, that is, the number of ports corresponding to the second channel information. The number of ports of the NZP CSI-RS resource is $P$, which can also be described as $P$-port NZP CSI-RS resource.

Optionally, the first time window may include one or more time units, and the terminal device needs to determine a start time and/or an end time of the first time window, so as to obtain channel information associated with the $N$ CSI-RS resources in the first time window. In the disclosure, the first time unit is used to limit a range of the start time of the first time window, and the second time unit is used to limit a range of the end time of the first time window. A time unit occupied by the earliest CSI-RS resource among the $N$ CSI-RS resources is no earlier than the first time unit, and a time unit occupied by the latest CSI-RS resource among the $N$ CSI-RS resources is no later than the second time unit, as such, the first time window can be no earlier than the first time unit, and/or no later than the second time unit.

For method 2, the terminal device can determine at least one channel matrix information in the second time window according to channel information associated with the $N$ CSI-RS resources in the first time window, and further predict a CSI in the second time window according to the at least one channel matrix information in the second time window. Alternatively, the terminal device can predict a CSI in the second time window according to channel information associated with the $N$ CSI-RS resources in the first time window. The CSI in the second time window predicted by the terminal device can be sent to the network device, so that the network device performs beam management, mobility management, rate matching, and other processing. The disclosure provides an example where the terminal device sends the CSI in the second time window in the third time unit. An index of the third time unit for the terminal device to send the second CSI report may be indicated by the network device, for example, the network device instructs the terminal device to send the second CSI report in slot $n'$ (that is, the index of the slot is $n'$). The second CSI report includes the CSI in the second time window.

Before sending the second CSI report to the network device, the terminal device needs to determine whether the second CSI report can be reported. Reporting may occur only when the terminal device receives at least one measurement resource (e.g., CSI-RS resource and/or CSI-IM resource, etc.) no later than a CSI reference resource. Further, the terminal device needs to determine a time unit occupied by the CSI reference resource in time domain. The disclosure provides an example where the time unit occupied by the CSI reference resource in time domain is a fourth time unit. It can be understood that, the CSI reference resource corresponds to the CSI in the second time window, that is, corresponds to the second CSI report. The timing for reporting the CSI in the second time window can be understood as a time unit for sending the second CSI report.

On condition that the network device indicates the index of the third time unit, the terminal device can determine an index of the fourth time unit according to the index of the third time unit. For example, taking a slot as an example of the time unit, the third time unit can be represented as slot $n'$, and a slot index of the fourth time unit can be represented as

$$n - n_{CSI\_ref} - K_{offset} \cdot \frac{2^{\mu_{DL}}}{2^{\mu_{K_{offset}}}}$$

, where $n$ is a downlink slot corresponding to an uplink slot $n'$, and the relationship between the two slots can refer to the specific description of "1. Timing for reporting CSI report".

Optionally, on condition that the index of the fourth time unit is determined, the terminal device can determine the range of the start time and/or the end time of the first time window according to the index of the fourth time unit.

Example 1: the fourth time unit is spaced apart from the first time unit by a third difference, and the third difference is an absolute difference. The third difference is predefined by the protocol, or indicated by the network device, or determined according to capability information of the terminal device. Alternatively, the third difference is greater than a third threshold, where the third threshold is indicated by the network device, or predefined by the protocol, or determined according to capability information of the terminal device. The terminal device can determine an index of the first time unit according to the index of the fourth time unit and the third difference, and further determine the range of the start time of the first time window. Exemplarily, taking a slot as an example of the time unit, the third difference can be expressed as $q1$,

where $q1$ is a positive integer, a slot index of the fourth time unit can be expressed as $n - n_{CSI\_ref} - K_{offset} \cdot \frac{2^{\mu_{DL}}}{2^{\mu_{K_{offset}}}}$, and

$$U = n - n_{CSI\_ref} - K_{offset} \cdot \frac{2^{\mu_{DL}}}{2^{\mu_{K_{offset}}}} - q1$$

a slot index of the first time unit can be expressed as .

Example 2: the fourth time unit is spaced apart from the second time unit by a fourth difference, and the fourth difference is an absolute difference. The fourth difference is predefined by the protocol, or indicated by the network device, or determined according to capability information of the terminal device. Alternatively, the fourth difference is greater than a fourth threshold, where the fourth threshold is indicated by the network device, or predefined by the protocol, or determined according to capability information of the terminal device. The terminal device can determine an index of the second time unit according to the index of the fourth time unit and the fourth difference, and further determine the range of the end time of the first time window. Exemplarily, taking a slot as an example of the time unit, the fourth difference can be expressed as *k1,* where *k1* is a positive integer less than or equal to *q1,* a slot index of the fourth time unit can be expressed as

$$n - n_{CSI\_ref} - K_{offset} \cdot \frac{2^{\mu_{DL}}}{2^{\mu_{K_{offset}}}}$$

, and a slot index of the second time unit can be expressed as

$$L = n - n_{CSI\_ref} - K_{offset} \cdot \frac{2^{\mu_{DL}}}{2^{\mu_{K_{offset}}}} - k1.$$

Example 3: the fourth time unit is spaced apart from the first time unit by the third difference, the fourth time unit is spaced apart from the second time unit by the fourth difference, and the third difference and the fourth difference are each an absolute difference. The third difference is predefined by the protocol, or indicated by the network device, or determined according to capability information of the terminal device. Alternatively, the third difference is greater than the third threshold, where the third threshold is indicated by the network device, or predefined by the protocol, or determined according to capability information of the terminal device. The fourth difference is predefined by the protocol, or indicated by the network device, or determined according to capability information of the terminal device. Alternatively, the fourth difference is greater than the fourth threshold, where the fourth threshold is indicated by the network device, or predefined by the protocol, or determined according to capability information of the terminal device. The terminal device can determine the range of the first time window according to the index of the fourth time unit, the third difference, and the fourth difference.

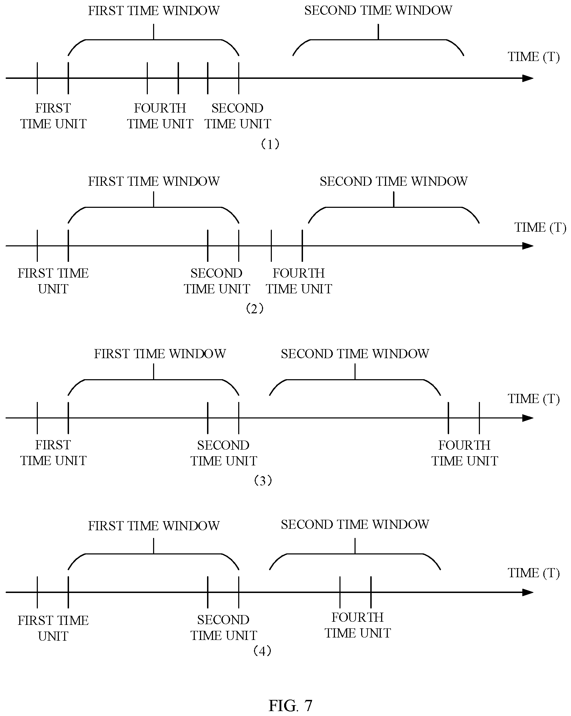

In a first embodiment, the start time of the fourth time unit is later than the end time of the first time unit, and/or the end time of the fourth time unit is earlier than the start time of the second time window, for example, see FIG. 7 (1) and FIG. 7 (2). FIG. 7 (1) illustrates an example where the start time of the fourth time unit is later than the end time of the first time unit, and the end time of the fourth time unit is earlier than the end time of the first time window, that is, earlier than the start time of the second time window. FIG. 7 (2) illustrates an example where the start time of the fourth time unit is later than the end time of the first time window, that is, later than the end time of the first time unit, and the end time of the fourth time unit is earlier than the end time of the first time window.

In a second embodiment, the start time of the fourth time unit is later than the start time of the second time window, for example, see FIG. 7 (3) and FIG. 7 (4). FIG. 7 (3) illustrates an example where the start time of the fourth time unit is later than the end time of the second time window, that is, the fourth time unit is later than the second time window. FIG. 7 (3) illustrates an example where the start time of the fourth time unit is later than the start time of the second time window, and the end time of the fourth time unit is earlier than the end time of the second time window, which can be understood that the fourth time unit is within the second time window.

For method 2, for details of the CPU occupied by the second CSI report and the processing time requirement for the second CSI report, reference can be made to "3. CSI processing unit (CPU) occupied by CSI report" and "4. CSI computation time requirement for CSI report". Alternatively, the CPU occupied by the second CSI report and the processing time requirement for the second CSI report can refer to method 1.

For case 1, even if *CSI-ReportConfig* has no associated *CSI-ResourceConfig,* the terminal device can predict the second channel information according to the first channel information, thereby effectively reducing network overhead and helping to improve network performance.

Case 2: *CSI-ReportConfig* has associated *CSI-ResourceConfig.*

In some embodiments, for case 2, the first channel information may include channel information associated with M first CSI reports in the first time window, or channel information associated with N CSI-RS resources in the first time window. For details of the two methods, reference can be made to the description of method 1 and method 2 of case 1, which will not be repeated herein.

In other embodiments, for the first channel information including channel information associated with *N* CSI-RS resources in the first time window, the fourth time unit is different from the fourth time unit involved in method 2 of case 1. In these embodiments, an index S 1 of the fourth time unit satisfies the following expression:

$$S1 = n - n_{CSI\_ref} - K_{offset} \cdot \frac{2^{\mu_{DL}}}{2^{\mu_{K_{offset}}}} - s_{offset} \; ;$$

where S1 represents the index of the fourth time unit, which is only for illustration purpose; in practice, other letters and/or numbers may be used to represent an index of a time unit occupied by a CSI reference resource in time domain; $n$ is

$$n = \left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \right\rfloor \cdot 2^{\mu_{UL}}$$

determined according to the third time unit, and                                          if the third time unit is represented as slot $n'$ (i.e., a slot index of the third time unit is $n'$); $n_{CSI\_ref}$ can refer to the description of $n_{CSI\_ref}$ in "1. Timing for reporting CSI report"; $K_{offset}$ is configured by a higher layer parameter; $\mu_{K_{offset}}$ represents a subcarrier spacing (SCS) corresponding to $K_{offset}$; $\mu_{DL}$ represents an SCS for downlink; $s_{offset}$ represents a time unit offset, such as a slot offset; $s_{offset}$ is predefined by the protocol, or indicated by the network device, or determined according to capability information of the terminal device. The time unit offset may be a positive value or a negative value, for example, the positive value can represent an offset in a direction of time advancement, and the negative value can represent an offset in a direction opposite to the direction of time advancement.

It can be understood that, in the above embodiments, a downlink slot of the CSI reference resource is redefined, and the downlink slot of the CSI reference resource is related to a time unit offset compared to the downlink slot of the CSI reference resource in "1. Timing for reporting CSI report".

Alternatively, in these embodiments, the index S1 of the fourth time unit satisfies the following expression:

$$S1 = n - n'_{CSI\_ref} - K_{offset} \cdot \frac{2^{\mu_{DL}}}{2^{\mu_{K_{offset}}}} \; ;$$

where S1 represents the index of the fourth time unit, which is only for illustration purpose; in practice, other letters and/or numbers may be used to represent an index of a time unit occupied by a CSI reference resource in time domain; n is

$$n = \left\lfloor n' \cdot \frac{2^{\mu_{DL}}}{2^{\mu_{UL}}} \right\rfloor + \left\lfloor \left( \frac{N^{CA}_{slot,offset,UL}}{2^{\mu_{offset,UL}}} - \frac{N^{CA}_{slot,offset,DL}}{2^{\mu_{offset,DL}}} \right) \right\rfloor \cdot 2^{\mu_{UL}}$$

determined according to the third time unit, and                                          if the third time unit is represented as slot $n'$; $K_{offset}$ is configured by a higher layer parameter; $\mu_{K_{offset}}$ represents an SCS corresponding to $K_{offset}$; $\mu_{DL}$ represents an SCS for downlink; a difference between $n'_{CSI\_ref}$ and $n_{CSI\_ref}$ is $S \cdot 2^{\mu_{DL}}$, and $S$ is a positive integer greater than or equal to 0; $S$ is predefined by the protocol, or indicated by the network device, or determined according to capability information of the terminal device. The difference $S \cdot 2^{\mu_{DL}}$ between $n'_{CSI\_ref}$ and $n_{CSI\_ref}$ may be $n'_{CSI\_ref} - n_{CSI\_ref} = S \cdot 2^{\mu_{DL}}$ or $n_{CSI\_ref} - n'_{CSI\_ref} = S \cdot 2^{\mu_{DL}}$.

It can be understood that, in the above embodiments, $n_{CSI\_ref}$ is redefined, that is, $n'_{CSI\_ref}$, $n'_{CSI\_ref}$ is related to an offset compared to $n_{CSI\_ref}$ in "1. Timing for reporting CSI report".

For case 2, for details of the CPU occupied by the second CSI report and the processing time requirement for the second CSI report, reference can be made to "3. CSI processing unit (CPU) occupied by CSI report" and "4. CSI computation time requirement for CSI report". Alternatively, the CPU occupied by the second CSI report and the processing time requirement for the second CSI report can refer to method 1 of case 1.

For case 2, since *CSI-ReportConfig* has associated *CSI ResourceConfig,* the terminal device can determine the number of ports of the first channel information according to the *CSI-ResourceConfig* associated with *CSI-ReportConfig,* that is, determine the number of ports of the second channel information. For example, if *CSI ResourceConfig* is used for configuring *P*-port NZP CSI-RS resources, the number of ports of the first channel information is *P.*

For case 2, since *CSI-ReportConfig* is associated with *CSI ResourceConfig,* optionally, a resource configured by *CSI ResourceConfig* can be understood as *N* CSI-RS resources in the first time window.

For case 2 where *CSI-ReportConfig* is associated with *CSI ResourceConfig,* the terminal device can not only determine the number of ports of the first channel information, but also predict the second channel information according to the first channel information, thereby helping to improve network performance.

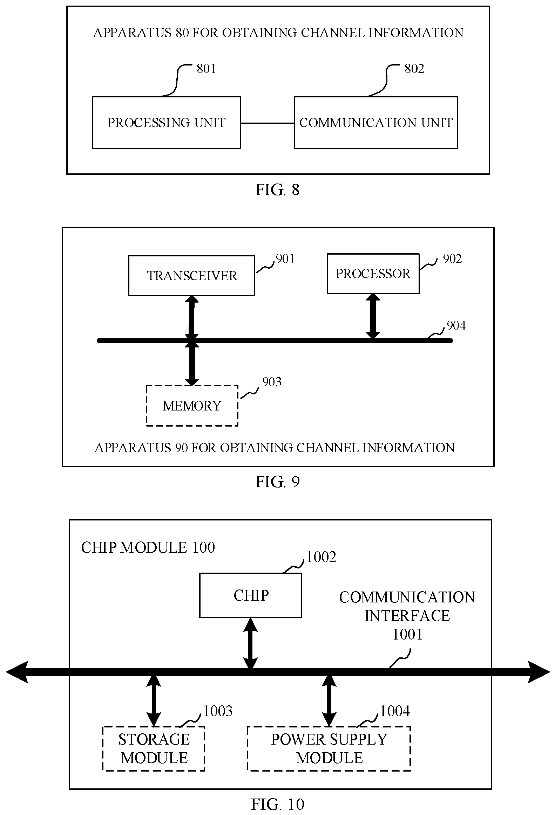

Referring to FIG. 8, FIG. 8 is a schematic structural diagram illustrating an apparatus for obtaining channel information provided in the disclosure. An apparatus 80 for obtaining channel information may be a terminal device or a device matching the terminal device. As shown in FIG. 8, the apparatus 80 for obtaining channel information includes a processing unit 801 and a communication unit 802. The communication unit 802 is configured to receive indication information from a network device, the indication information indicating predicted channel information. The processing unit 801 is configured to determine second channel information according to first channel information, the first channel information including at least one channel information in a first time window, the second channel information including at least one channel information in a second time window, and an end time of the first time window being earlier than a start time of the second time window.

In a possible embodiment, the processing unit 801 is further configured to determine, according to the second channel information, a CSI in the second time window.

In a possible embodiment, the first time window includes one or more time units, and the second time window includes one or more time units.

In a possible embodiment, the first channel information including the at least one channel information in the first time window includes: the first channel information including channel information associated with $M$ first CSI reports in the first time window, where $M$ is a positive integer; where a start time of the first time window is no earlier than an end time of a first time unit, and/or the end time of the first time window is no later than an end time of a second time unit; the first time unit is spaced apart from a third time unit by a first difference, the second time unit is spaced apart from the third time unit by a second difference, the first difference is greater than or equal to the second difference, and the third time unit is used for sending a CSI in the second time window.

In a possible embodiment, the first difference is predefined, or indicated by the network device, or determined according to capability information of a terminal device; and/or, the second difference is predefined, or indicated by the network device, or determined according to the capability information of the terminal device.

In a possible embodiment, the first channel information includes channel information associated with $M$ consecutive first CSI reports in the first time window; and/or, the M first CSI reports correspond to a non-zero power channel state information reference signal (NZP CSI-RS) for channel measurement, and the number of ports corresponding to the NZP CSI-RS is the same as the number of ports corresponding to the first channel information.

In a possible embodiment, the processing unit 801 is further configured to determine a reference CSI report from the $M$ first CSI reports, wherein a difference between the second time unit and a time unit occupied by the reference CSI report is less than or equal to a threshold.

In a possible embodiment, the CSI in the second time window is contained in a second CSI report, a CSI processing time corresponding to the second CSI report is a time interval from a first physical uplink channel resource to a second physical uplink channel resource in time domain, the first physical uplink channel resource is used for carrying the reference CSI report, and the second physical uplink channel resource is used for carrying the second CSI report.

In a possible embodiment, the CSI in the second time window is contained in a second CSI report, and the number of CPUs corresponding to the second CSI report is $R$, where $R$ is a positive integer, and $R$ is predefined or indicated by the network device.

In a possible embodiment, the first channel information including the at least one channel information in the first time window includes: the first channel information including channel information associated with $N$ CSI-RS resources in the first time window, where $N$ is a positive integer; where a start time of the first time window is no earlier than an end time of the first time unit, and/or the end time of the first time window is no later than an end time of the second time unit.

In a possible embodiment, the first channel information includes channel information associated with $N$ consecutive CSI-RS resources in the first time window; and/or, the $N$ CSI resources are NZP CSI-RS resources for channel measurement, and the number of ports corresponding to the NZP CSI-RS resources is the same as the number of ports corresponding to the second channel information.

In a possible embodiment, the processing unit 801 is further configured to determine a fourth time unit occupied by a CSI reference resource in time domain, where the CSI reference resource corresponds to a CSI in the second time window.

In a possible embodiment, a start time of the fourth time unit is later than the end time of the first time unit, and/or an end time of the fourth time unit is earlier than a start time of the second time window.

In a possible embodiment, a start time of the fourth time unit is later than a start time of the second time window, the first time unit is spaced apart from the fourth time unit by a third difference, the second time unit is spaced apart from the fourth time unit by a fourth difference, and the third difference is greater than or equal to the fourth difference.

In a possible embodiment, the third difference is predefined, or indicated by the network device, or determined according to capability information of a terminal device; and/or, the fourth difference is predefined, or indicated by the network device, or determined according to the capability information of the terminal device.

In a possible embodiment, an index $S1$ of the fourth time unit satisfies the following expression:

$$S1 = n - n_{CSI\_ref} - K_{offset} \cdot \frac{2^{\mu_{DL}}}{2^{\mu_{K_{offset}}}} - s_{offset};$$

where $n$ is determined according to a third time unit, and the third time unit is used for sending the CSI in the second time window; $K_{offset}$ is configured by a higher layer parameter; $\mu_{K_{offset}}$ represents an SCS corresponding to $K_{offset}$; $\mu_{DL}$ represents an SCS for downlink; $s_{offset}$ represents a time unit offset, and $s_{offset}$ is predefined, or indicated by the network device, or determined according to capability information of a terminal device.

In a possible embodiment, an index $S1$ of the fourth time unit satisfies the following expression:

$$S1 = n - n'_{CSI\_ref} - K_{offset} \cdot \frac{2^{\mu_{DL}}}{2^{\mu_{K_{offset}}}};$$

where $n$ is determined according to a third time unit, and the third time unit is used for sending the CSI in the second time window; $K_{offset}$ is configured by a higher layer parameter; $\mu_{K_{offset}}$ represents an SCS corresponding to $K_{offset}$; $\mu_{DL}$ represents an SCS for downlink; a difference between $n'_{CSI\_ref}$ and $n_{CSI\_ref}$ is $S \cdot 2^{\mu DL}$, and $S$ is a positive integer greater than or equal to 0; $S$ is predefined, or indicated by the network device, or determined according to capability information of a terminal device.

In a possible embodiment, the communication unit 802 is further configured to receive CSI report configuration information from the network device, where no CSI resource configuration information is associated with the CSI report configuration information.

In a possible embodiment, the communication unit 802 is further configured to receive CSI report configuration information from the network device, where the CSI report configuration information is associated with CSI resource configuration information.

In a possible embodiment, the CSI resource configuration information is NZP CSI-RS resource configuration information, the communication unit 802 is further configured to determine the number of ports corresponding to the second channel information according to the NZP CSI-RS resource configuration information.

In a possible embodiment, the CSI in the second time window is contained in a second CSI report, a CSI computation time requirement of the second CSI report is different from a CSI computation time requirement of the first CSI report, and the first CSI report carries L1-RSRP or L1-SINR.

In a possible embodiment, the number of ports corresponding to the first channel information is the same as the number of ports corresponding to the second channel information.

Referring to FIG. 9, FIG. 9 is a schematic structural diagram illustrating another apparatus for obtaining channel information provided in embodiments of the disclosure. The apparatus 90 for obtaining channel information can be a terminal device or a device matched with a terminal device. The apparatus 90 for obtaining channel information includes a transceiver 901 and a processor 902. Optionally, the apparatus for obtaining channel information further includes a memory 903. The transceiver 901, the processor 902, and the memory 903 are connected to each other via a bus 904 or other methods. The bus is represented by a thick line in FIG. 9. The connection between other components is merely illustrative and is not limited herein. The bus may include an address bus, a data bus, a control bus, etc. For ease of representation, only one thick line is used in FIG. 9, but it does not mean that there is only one bus or one type of bus.

The coupling of embodiments of the disclosure may be indirect coupling or communication connection between devices, units, or modules, may be in the form of electrical, mechanical, etc., and is used for information exchange between devices, units, or modules. The specific connection medium between the transceiver 901, the processor 902, and the memory 903 is not limited in embodiments of the disclosure.

The memory 903 may include a read-only memory (ROM) and a random access memory (RAM), and can provide instructions and data for the processor 902. A portion of the memory 903 may also include a non-transitory RAM.

The processor 902 may be a central processing unit (CPU), or other general-purpose processors, digital signal processors (DSP), application-specific integrated circuits (ASIC), field-programmable gate arrays (FPGA) or other programmable logic devices, discrete gates or transistor logic devices, discrete hardware components, etc. The general-purpose processor may be a microprocessor. Optionally, the processor 902 may also be any conventional processor, etc.

In an optional embodiment, the memory 903 is used to store program instructions; the processor 902 is configured to call the program instructions stored in the memory 903 to execute the operations in embodiments corresponding to FIG. 4, which are performed by the terminal device.

In embodiments of the disclosure, the method provided in embodiments of the disclosure can be implemented by running computer programs (including program codes) capable of executing the operations involved in the above method on a general computing device (e.g., a computer) including a processing element and a storage element (e.g., a CPU, a RAM, and a ROM). The computer programs can be recorded on, for example, a computer-readable recording medium, and loaded into the above computing device through the computer-readable recording medium and run therein.

Based on the same inventive concept, the principles of technical problem solving and advantageous effects of the apparatus 90 for obtaining channel information provided in embodiments of the disclosure are similar to the principles of technical problem solving and advantageous effects of the embodiments corresponding to FIG. 4 of the disclosure, and thus, reference can be made to the principles and advantageous effects of embodiments of the method, for the sake of concise description, which will not be repeated herein.

The apparatus for obtaining channel information may be, for example, a chip or a chip module.

Embodiments of the disclosure further provide a chip. The chip includes a processor. The processor is configured to execute the relevant operations of the terminal device in the foregoing method embodiments. The chip is configured to: receive indication information from a network device, the indication information indicating predicted channel information; and determine second channel information according to first channel information, the first channel information including at least one channel information in a first time window, the second channel information including at least one channel information in a second time window, and an end time of the first time window being earlier than a start time of the second time window.

Referring to FIG. 10, FIG. 10 is a schematic structural diagram illustrating a chip module provided in embodiments of the disclosure. A chip module 100 can be configured to execute the relevant operations of the terminal device in the foregoing method embodiments. The chip module 100 includes a communication interface 1001 and a chip 1002. The communication interface is used for internal communication of the chip module, or for the chip module to communicate with an external device. The chip is configured to implement the functions of the terminal device in embodiments of the disclosure.

For example, the communication interface 1001 is configured to receive indication information from a network device, the indication information indicating predicted channel information; the chip 1002 is configured to determine second channel information according to first channel information, the first channel information including at least one channel information in a first time window, the second channel information including at least one channel information in a second time window, and an end time of the first time window being earlier than a start time of the second time window.

Optionally, the chip module 100 may further include a storage module 1003 and a power supply module 1004. The storage module 1003 is used to store data and instructions. The power supply module 1004 is used to provide power for the chip module.

For each device or product applied to or integrated in the chip module, each module contained therein may be implemented by hardware such as circuits, and different modules may be located in the same component (e.g., a chip, a circuit module, etc.) or located in different components of the chip module; alternatively, at least some modules contained therein may be implemented by software programs that run on a processor integrated inside the chip module, and the remaining modules (if any) may be implemented by hardware such as circuits.

Embodiments of the disclosure further provide a computer-readable storage medium. The computer-readable storage medium stores one or more instructions, which are suitable for being loaded by a processor and are operable to execute the method provided in the foregoing method embodiments.

Embodiments of the disclosure further provide a computer program product. The computer program product includes computer programs or instructions which, when run on a computer, are operable with the computer to execute the method provided in the foregoing method embodiments.

It is to be noted that, for the sake of simplicity, the foregoing embodiments are described as a series of action combinations, however, it will be appreciated by those skilled in the art that the disclosure is not limited by the sequence of actions described. That is because that, certain steps or operations in embodiments of the disclosure may be performed in other order or simultaneously. Besides, it will be appreciated by those skilled in the art that the embodiments described in the specification are exemplary embodiments, and the actions, operations, modules, or units involved are not necessarily essential to embodiments of the disclosure.

In the foregoing embodiments, the description of each embodiment has its own emphasis. For the parts not described in detail in one embodiment, reference may be made to related descriptions in other embodiments.

The operations of the method or algorithm described in embodiments of the disclosure may be implemented in hardware, or may be implemented in a manner in which a processor executes software instructions. The software instructions may be composed of corresponding software modules. The software modules may be stored in an RAM, a flash memory, an ROM, an erasable programmable ROM (EPROM), an electrically EPROM (EEPROM), a register, a hard disk, a removable hard disk, a compact disc ROM (CD-ROM), or any other form of storage medium known in the art. An exemplary storage medium is coupled with the processor, so that the processor can read information from, and write information to, the storage medium. The storage medium may also be a part of the processor. The processor and the storage medium may be in an ASIC. Additionally, the ASIC may be in a terminal device or a management device. The processor and the storage medium may also exist in the terminal device or the management device as discrete components.

Those skilled in the art should realize that, in one or more of the foregoing examples, the functions described in embodiments of the disclosure may be implemented in whole or in part by software, hardware, firmware, or any combination thereof. When implemented in software, the functions can be implemented in whole or in part in the form of a computer program product. The computer program product includes one or more computer instructions. The computer instructions, when loaded and executed on a computer, are operable to implement all or part of the processes or functions described in embodiments of the disclosure. The computer may be a general-purpose computer, a special-purpose computer, a computer network, or other programmable devices. The computer instructions may be stored in a computer readable storage medium, or transmitted from a computer-readable storage medium to another computer-readable storage medium. For example, the computer instructions are transmitted from a website site, a computer, a server, or a data center to another website site, another computer, another server, or another data center in a wired manner (e.g., coaxial cable, optical fiber, digital subscriber line (DSL)) or a wireless manner (e.g., infrared, wireless, microwave). The computer-readable storage medium may be any available medium that can be accessed by a computer or a data storage device (e.g., a server, a data center) integrated with one or more available media. The available medium may be a magnetic medium (e.g., a floppy disk, a hard disk, a magnetic tape), an optical medium (e.g., digital video disc (DVD)), or a semiconductor medium (e.g., a solid state disk (SSD)), etc.

The modules/units contained in each device and product described in the foregoing embodiments may be software modules/units or hardware modules/units, or may be partially software modules/units and partially hardware modules/units. For example, for each device and product applied to or integrated in a chip, the modules/units contained therein may all be implemented in the form of hardware such as circuits, or at least some of the modules/units contained therein may be implemented in the form of software programs that run on a processor integrated inside the chip, and the remaining modules/units (if any) may be implemented in the form of hardware such as circuits; for each device and product applied to or integrated in a chip module, the modules/units contained therein may all be implemented in the form of hardware such as circuits, and different modules/units may be located in the same component (e.g., a chip, a circuit module) of the chip module or located in different components of the chip module, or at least some of the modules/units contained therein may be implemented in the form of software programs that run on a processor integrated inside the chip module, and the remaining modules/units (if any) may be implemented in the form of hardware such as circuits; for each device and product applied to or integrated in a terminal, the modules/units contained therein may all be implemented in the form of hardware such as circuits, and different modules/units may be located in the same component (e.g., a chip, a circuit module) of the terminal or located in different components of the terminal, or at least some of the modules/units contained therein may be implemented in the form of software programs that run on a processor integrated inside the terminal, and the remaining modules/units (if any) may be implemented in the form of hardware such as circuits.

While purposes, technical solutions, and beneficial effects of embodiments of the disclosure have been illustrated in detail above with reference to the embodiments of the disclosure, it will be understood by those skilled in the art that the foregoing embodiments are merely illustrative examples, and the protection scope of the disclosure is not limited thereto. Any modifications, equivalent substitutions, or improvements made thereto on the basis of the technical solutions of the embodiments of the disclosure shall all be encompassed within the protection scope of the embodiments of the disclosure.

**Claims**

1. A method for obtaining channel information, comprising:

   receiving indication information from a network device, the indication information indicating predicted channel information; and
   determining second channel information according to first channel information, the first channel information comprising at least one channel information in a first time window, the second channel information comprising at least one channel information in a second time window, and an end time of the first time window being earlier than a start time of the second time window.

2. The method of claim 1, further comprising:
   determining, according to the second channel information, a channel state information, CSI, in the second time window.

3. The method of claim 1, wherein the first time window comprises one or more time units, and the second time window comprises one or more time units.

4. The method of any of claims 1 to 3, wherein the first channel information comprising the at least one channel information in the first time window comprises:

   the first channel information comprising channel information associated with $M$ first channel state information,

CSI, reports in the first time window, wherein $M$ is a positive integer;

wherein a start time of the first time window is no earlier than an end time of a first time unit, and/or the end time of the first time window is no later than an end time of a second time unit; the first time unit is spaced apart from a third time unit by a first difference, the second time unit is spaced apart from the third time unit by a second difference, the first difference is greater than or equal to the second difference, and the third time unit is used for sending a CSI in the second time window.

5. The method of claim 4, wherein

the first difference is predefined, or indicated by the network device, or determined according to capability information of a terminal device; and/or
the second difference is predefined, or indicated by the network device, or determined according to the capability information of the terminal device.

6. The method of claim 4, wherein

the first channel information comprises channel information associated with $M$ consecutive first CSI reports in the first time window; and/or
the $M$ first CSI reports correspond to a non-zero power channel state information reference signal, NZP CSI-RS, for channel measurement, and the number of ports corresponding to the NZP CSI-RS is the same as the number of ports corresponding to the first channel information.

7. The method of claim 4, further comprising:
determining a reference CSI report from the $M$ first CSI reports, wherein a difference between the second time unit and a time unit occupied by the reference CSI report is less than or equal to a threshold.

8. The method of claim 7, wherein the CSI in the second time window is contained in a second CSI report, a CSI processing time corresponding to the second CSI report is a time interval from a first physical uplink channel resource to a second physical uplink channel resource in time domain, the first physical uplink channel resource is used for carrying the reference CSI report, and the second physical uplink channel resource is used for carrying the second CSI report.

9. The method of claim 4, wherein the CSI in the second time window is contained in a second CSI report, and the number of CSI processing units, CPU, corresponding to the second CSI report is $R$, wherein $R$ is a positive integer, and $R$ is predefined or indicated by the network device.

10. The method of any of claims 1 to 3, wherein the first channel information comprising the at least one channel information in the first time window comprises:

the first channel information comprising channel information associated with $N$ channel state information reference signal, CSI-RS, resources in the first time window, wherein $N$ is a positive integer;
wherein a start time of the first time window is no earlier than an end time of the first time unit, and/or the end time of the first time window is no later than an end time of the second time unit.

11. The method of claim 10, wherein

the first channel information comprises channel information associated with $N$ consecutive CSI-RS resources in the first time window; and/or
the $N$ CSI resources are non-zero power channel state information reference signal, NZP CSI-RS, resources for channel measurement, and the number of ports corresponding to the NZP CSI-RS resources is the same as the number of ports corresponding to the second channel information.

12. The method of claim 10, further comprising:
determining a fourth time unit occupied by a CSI reference resource in time domain, wherein the CSI reference resource corresponds to a CSI in the second time window.

13. The method of claim 12, wherein a start time of the fourth time unit is later than the end time of the first time unit, and/or an end time of the fourth time unit is earlier than a start time of the second time window.

14. The method of claim 12, wherein a start time of the fourth time unit is later than a start time of the second time window, the first time unit is spaced apart from the fourth time unit by a third difference, the second time unit is spaced apart from the fourth time unit by a fourth difference, and the third difference is greater than or equal to the fourth difference.

15. The method of claim 14, wherein

   the third difference is predefined, or indicated by the network device, or determined according to capability information of a terminal device; and/or
   the fourth difference is predefined, or indicated by the network device, or determined according to the capability information of the terminal device.

16. The method of claim 12, wherein an index *S1* of the fourth time unit satisfies the following expression:

$$S1 = n - n_{CSI\_ref} - K_{offset} \cdot \frac{2^{\mu_{DL}}}{2^{\mu_{K_{offset}}}} - s_{offset} \ ;$$

wherein *n* is determined according to a third time unit, and the third time unit is used for sending the CSI in the second time window; $K_{offset}$ is configured by a higher layer parameter; $\mu_{K_{offset}}$ represents a subcarrier spacing, SCS, corresponding to $K_{offset}$ ; $\mu_{DL}$ represents an SCS for downlink; $s_{offset}$ represents a time unit offset, and $s_{offset}$ is predefined, or indicated by the network device, or determined according to capability information of a terminal device.

17. The method of claim 12, wherein an index *S1* of the fourth time unit satisfies the following expression:

$$S1 = n - n'_{CSI\_ref} - K_{offset} \cdot \frac{2^{\mu_{DL}}}{2^{\mu_{K_{offset}}}} \ ;$$

wherein *n* is determined according to a third time unit, and the third time unit is used for sending the CSI in the second time window; $K_{offset}$ is configured by a higher layer parameter; $\mu_{K_{offset}}$ represents a subcarrier spacing, SCS, corresponding to $K_{offset}$ ; $\mu_{DL}$ represents an SCS for downlink; a difference between $n'_{CSI\_ref}$ and $n_{CSI\_ref}$ is S · $2^{\mu_{DL}}$ , and S is a positive integer greater than or equal to 0; S is predefined, or indicated by the network device, or determined according to capability information of a terminal device.

18. The method of any of claims 1 to 10, further comprising:
   receiving channel state information, CSI, report configuration information from the network device, wherein no CSI resource configuration information is associated with the CSI report configuration information.

19. The method of any of claims 1 to 10, further comprising:
   receiving channel state information, CSI, report configuration information from the network device, wherein the CSI report configuration information is associated with CSI resource configuration information.

20. The method of claim 19, wherein the CSI resource configuration information is non-zero power channel state information reference signal, NZP CSI-RS, resource configuration information, and the method further comprises: determining the number of ports corresponding to the second channel information according to the NZP CSI-RS resource configuration information.

21. The method of any of claims 4 to 9, wherein the CSI in the second time window is contained in a second CSI report, a CSI computation time requirement of the second CSI report is different from a CSI computation time requirement of the first CSI report, and the first CSI report carries layer 1 reference signal received power, L1-RSRP, or layer 1 signal to interference plus noise ratio, L1-SINR.

22. The method of any of claims 1 to 10, wherein the number of ports corresponding to the first channel information is the same as the number of ports corresponding to the second channel information.

23. An apparatus for obtaining channel information, comprising:

a communication unit, configured to receive indication information from a network device, the indication information indicating predicted channel information; and

a processing unit, configured to determine second channel information according to first channel information, the first channel information comprising at least one channel information in a first time window, the second channel information comprising at least one channel information in a second time window, and an end time of the first time window being earlier than a start time of the second time window.

24. A terminal device, comprising:

a processor;

a memory; and

computer programs or instructions, stored in the memory;

the computer programs or instructions being operable with the processor to execute the operations of the method of any of claims 1 to 22.

25. A chip, comprising a processor configured to execute the operations of the method of any of claims 1 to 22.

26. A chip module, comprising a communication interface and a chip, wherein

the communication interface is configured for internal communication of the chip module, or for the chip module to communicate with an external device; and

the chip is configured to:

receive indication information from a network device, the indication information indicating predicted channel information; and

determine second channel information according to first channel information, the first channel information comprising at least one channel information in a first time window, the second channel information comprising at least one channel information in a second time window, and an end time of the first time window being earlier than a start time of the second time window.

27. A computer-readable storage medium, storing computer programs or instructions which, when executed, are operable to execute the operations of the method of any of claims 1 to 22.

FIG. 1

FIG. 2

FIG. 3

FIG. 4

FIRST TIME WINDOW

FIRST
TIME UNIT

SECOND
TIME UNIT

TIME (T)

(1)

FIRST TIME WINDOW

FIRST
TIME UNIT

SECOND
TIME UNIT

TIME (T)

(2)

FIG. 5

FIRST TIME WINDOW

SECOND TIME WINDOW

FIRST
TIME UNIT

SECOND
TIME UNIT

THIRD
TIME UNIT

TIME (T)

(1)

FIRST TIME WINDOW

SECOND TIME WINDOW

FIRST
TIME UNIT

SECOND
TIME UNIT

THIRD
TIME UNIT

TIME (T)

(2)

FIRST TIME WINDOW

SECOND TIME WINDOW

FIRST
TIME UNIT

SECOND
TIME UNIT

THIRD
TIME UNIT

TIME (T)

(3)

FIG. 6

FIRST TIME WINDOW          SECOND TIME WINDOW

TIME (T)

FIRST
TIME UNIT      FOURTH       SECOND
               TIME UNIT    TIME UNIT

(1)

FIRST TIME WINDOW          SECOND TIME WINDOW

TIME (T)

FIRST TIME        SECOND      FOURTH
UNIT              TIME UNIT   TIME UNIT

(2)

FIRST TIME WINDOW          SECOND TIME WINDOW

TIME (T)

FIRST              SECOND               FOURTH
TIME UNIT          TIME UNIT            TIME UNIT

(3)

FIRST TIME WINDOW          SECOND TIME WINDOW

TIME (T)

FIRST TIME         SECOND        FOURTH
UNIT               TIME UNIT     TIME UNIT

(4)

FIG. 7

APPARATUS 80 FOR OBTAINING CHANNEL INFORMATION

801

802

PROCESSING UNIT

COMMUNICATION UNIT

FIG. 8

TRANSCEIVER
901

PROCESSOR
902

904

MEMORY
903

APPARATUS 90 FOR OBTAINING CHANNEL INFORMATION

FIG. 9

CHIP MODULE 100

1002

CHIP

COMMUNICATION
INTERFACE
1001

1003

STORAGE
MODULE

1004

POWER SUPPLY
MODULE

FIG. 10

| | **INTERNATIONAL SEARCH REPORT** | International application No. |
|---|---|---|
| | | **PCT/CN2023/088546** |

| **A.** | **CLASSIFICATION OF SUBJECT MATTER** |
|---|---|
| | H04W 24/02(2009.01)i |

According to International Patent Classification (IPC) or to both national classification and IPC

| **B.** | **FIELDS SEARCHED** |
|---|---|

Minimum documentation searched (classification system followed by classification symbols)

IPC: H04W,H04B,H04L

Documentation searched other than minimum documentation to the extent that such documents are included in the fields searched

Electronic data base consulted during the international search (name of data base and, where practicable, search terms used)

3GPP, CNTXT, DWPI, VCN, WPABS: 处理时间, 窗口, 时间窗, 多普勒, 推测, 预测, 预计, 未来, 未知, 信道矩阵, 延迟, indication, window, predict+, delay, channel matrix, doppler

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 110034792 A (RESEARCH INSTITUTE OF CHINA MOBILE COMMUNICATIONS CORP. et al.) 19 July 2019 (2019-07-19) description, paragraphs [0035], [0051]-[0055], [0074]-[0075], [0080]-[0091], and [0125]-[0126] | 1-27 |
| X | WO 2021075889 A1 (SAMSUNG ELECTRONICS CO., LTD.) 22 April 2021 (2021-04-22) description, paragraphs [174]-[188], and figures 9A-9B | 1-27 |
| A | WO 2020063460 A1 (HUAWEI TECHNOLOGIES CO., LTD.) 02 April 2020 (2020-04-02) entire document | 1-27 |
| A | US 2021091838 A1 (QUALCOMM INC) 25 March 2021 (2021-03-25) entire document | 1-27 |
| A | US 2021376895 A1 (QUALCOMM INC) 02 December 2021 (2021-12-02) entire document | 1-27 |
| A | QUALCOMM INC. "CSI enhancement for IOT and URLLC" *3GPP TSG RAN WG1 #104bis R1-2103800,* 14 April 2021 (2021-04-14), chapters 2-3 | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 June 2023** | **25 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

Form PCT/ISA/210 (patent family annex) (July 2022)

**INTERNATIONAL SEARCH REPORT**
Information on patent family members

International application No.

**PCT/CN2023/088546**

| Patent document cited in search report | | | Publication date (day/month/year) | Patent family member(s) | | | Publication date (day/month/year) |
|---|---|---|---|---|---|---|---|
| CN | 110034792 | A | 19 July 2019 | None | | | |
| WO | 2021075889 | A1 | 22 April 2021 | KR | 20210044645 | A | 23 April 2021 |
| | | | | EP | 4044537 | A1 | 17 August 2022 |
| | | | | IN | 202217027141 | A | 19 August 2022 |
| WO | 2020063460 | A1 | 02 April 2020 | CN | 110972157 | A | 07 April 2020 |
| US | 2021091838 | A1 | 25 March 2021 | EP | 4032219 | A1 | 27 July 2022 |
| | | | | WO | 2021055510 | A1 | 25 March 2021 |
| | | | | CN | 114402560 | A | 26 April 2022 |
| | | | | IN | 202247006842 | A | 18 March 2022 |
| US | 2021376895 | A1 | 02 December 2021 | WO | 2021242393 | A1 | 02 December 2021 |
| | | | | EP | 4158810 | A1 | 05 April 2023 |
| | | | | CN | 116210181 | A | 02 June 2023 |
| | | | | IN | 202227054479 | A | 06 January 2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210406402